(19) Europäisches Patentamt
European Patent Office
Office européen des brevets

(11) EP 2 373 761 B1

(12) **EUROPEAN PATENT SPECIFICATION**

(45) Date of publication and mention of the grant of the patent:
**21.08.2013 Bulletin 2013/34**

(21) Application number: **09774979.0**

(22) Date of filing: **01.12.2009**

(51) Int Cl.:
***C09K 19/38*** *(2006.01)* ***G02B 1/04*** *(2006.01)*

(86) International application number:
**PCT/IB2009/055446**

(87) International publication number:
**WO 2010/064194 (10.06.2010 Gazette 2010/23)**

(54) **ORGANIC POLYMER COMPOUND, OPTICAL FILM AND METHOD OF PRODUCTION THEREOF**

ORGANISCHE POLYMERVERBINDUNG, OPTISCHER FILM UND HERSTELLUNGSVERFAHREN DAFÜR

COMPOSE POLYMERE ORGANIQUE, FILM OPTIQUE ET SON PROCEDE DE FABRICATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.12.2008 US 119879 P**

(43) Date of publication of application:
**12.10.2011 Bulletin 2011/41**

(73) Proprietors:
- **CRYSOPTIX K.K.**
  **Tokyo 105-0001 (JP)**
- **Kasianova, Irina**
  **Moscow Region (RU)**

(72) Inventor: **KASIANOVA, Irina**
**Moscow Region (RU)**

(74) Representative: **Peebles, Katrina et al**
**Ablett & Stebbing**
**7-8 Market Place**
**London W1W 8AG (GB)**

(56) References cited:
**WO-A1-2009/130675 US-A- 4 749 770**
**US-A1- 2005 209 429**

- **THORN-CSANYI E ET AL: "SYNTHESIS FO THERMOTROPIC LIQUID CRYSTALLINE ALL-TRANS-P-PHENYLENEVINYLENE OLIGOMERS VIA TWO-STEP METATHESIS" MACROMOLECULAR SYMPOSIA, WILEY VCH VERLAG, WEINHEIM, DE, vol. 122, 1 August 1997 (1997-08-01), pages 77-81, XP000727257 ISSN: 1022-1360**
- **PASSMANN M ET AL: "NEMATIC IONOMERS AS MATERIALS FOR THE BUILD-UP OF MULTILAYERS" MACROMOLECULAR CHEMISTRY AND PHYSICS, WILEY-VCH VERLAG, WEINHEIM, DE, vol. 199, no. 2, 1 February 1998 (1998-02-01), pages 179-189, XP000750622 ISSN: 1022-1352**
- **FUJISHIRO K ET AL: "EFFECT OF BRANCHED METHYL GROUP IN LATERAL SUBSTITUENT ON MAIN CHAN LIQUID CRYSTALLINE POLYESTERS" POLYMER JOURNAL, SOCIETY OF POLYMER SCIENCE, TOKYO, JP, vol. 24, no. 12, 15 December 1992 (1992-12-15), pages 1337-1343, XP000363649 ISSN: 0032-3896**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 373 761 B1

## Description

### FIELD OF THE INVENTION

The present invention relates generally to the field of organic chemistry and particularly to the optical films for liquid crystal displays.

### BACKGROUND OF THE INVENTION

The liquid crystal display (LCD) technology has made a remarkable progress in the past years. Cellular phones, laptops, monitors, TV sets and even public displays based on LCD panels are presented on the market. The market of LCD is expected to keep growing in the near future and sets new tasks for researchers and manufacturers. One of the key growth sustainers is product quality improvement along with cost reduction.

Growing size of a LCD diagonal, which has already exceeded 100 inch size, imposes stronger restrictions onto the quality of optical components. In case of retardation films, very small color shift and ability to provide higher contrast ratio at wide viewing angles are required for high-quality viewing of large displays.

Nowadays there are still some disadvantages of LCD technology which impact the quality of liquid crystal displays and still make feasible the competitive technologies like plasma display panel (PDP). One of disadvantages is a decrease of contrast ratio at oblique viewing angles. In conventional LCD the viewing angle performance is strongly dependent upon polarizers' performance. Typical LCD comprises two dichroic polarizers crossed at 90°. However, at oblique angles the angle between projections of their axes deviates from 90°, and the polarizers become uncrossed. The light leakage increases with increasing off-axis oblique angle. This results in low contrast ratio at wide viewing angle along the bisector of crossed polarizers. Moreover, the light leakage becomes worse because of the liquid crystal cell placed between crossed polarizers.

Thus, the technological progress poses the task of developing new optical elements based on new materials with controllable properties. In particular, the necessary optical element in modern visual display systems is an optically anisotropic birefringent film that is optimized for the optical characteristics of an individual LCD module.

Various polymer materials are known in the prior art, which are intended for use in the production of optically anisotropic birefringent films. Optical films based on these polymers acquire optical anisotropy through uniaxial extension.

A triacetyl cellulose films are widely used as negative C plates in modem LCD polarizers. However, their disadvantage is related to a low value of birefringence. Thus, thinner films with high retardation value are desired for making displays cheaper and lighter.

Besides the stretching of the amorphous polymeric films, other polymer alignment techniques are known in the art. Thermotropic liquid crystalline polymers (LCP) can provide highly anisotropic films characterized by various types of birefringence. Manufacturing of such films comprises coating a polymer melt or solution on a substrate; for the latter case the coating step is followed by the solvent evaporation. Additional alignment actions are involved as well, such as an application of the electric field, using of the alignment layer or coating onto a stretched substrate. The after-treatment of the coating is set at a temperature at which the polymer exhibits liquid crystalline phase and for a time sufficient for the polymer molecules to be oriented. Examples of uniaxial and biaxial optical films production can be found in patent documents and scientific publications.

In the article by Li et al, Polymer, vol. 38, no. 13, pp. 3223-3227 (1997) the authors noted that some polymers provide optical anisotropy which is fairly independent of film thickness. They described special molecular order of rigid-chain polymers on the substrate. The director of molecules is preferentially in the plane of the substrate and has no preferred direction in the plane as shown in Figure 1 (prior art). However, the described method has a technological drawback. After applying the solution onto a hot substrate, temperature was controlled at 60°C to gently evaporate the solvent and dry the film for 60 min. After that the samples were dried at an elevated temperature of 150°C for 24 h in a vacuum oven to remove any residual solvent. The last step severely restricts the product commercialization and does not allow using the plastic substrate for LCD manufacturing.

Shear-induced mesophase organization of synthetic polyelectrolytes in aqueous solution was described by T. Funaki et al. in Langmuir, vol. 20, 6518-6520 (2004). Poly(2,2'-disulfonylbenzidine terephtalamide (PBDT) was prepared by an interfacial polycondensation reaction according to the procedure known in the prior art. Using polarizing microscope, the authors observed lyotropic nematic phase in aqueous solutions in the concentration range of 2.8-5.0 wt %. Wide angle X-ray diffraction study indicated that in the nematic state the PBDT molecules show an inter-chain spacing, d, of 0.30-0.34 nm, which is constant regardless of the concentration (2.8-5.0 wt %). The d value is smaller than that of the ordinary nematic polymers (0.41-0.45 nm), suggesting that PBDT rods in the nematic state have a strong inter-chain interaction in the nematic state to form the bundle-like structure despite the electrostatic repulsion of sulfonate anions. In the concentration range from 2 to 2.8 wt% a shear-induced birefringent (SIB) mesophase was observed.

A number of rigid rod water-soluble polymers was described by N. Sarkar and D. Kershner in Journal of Applied

Polymer Science, Vol. 62, pp. 393-408 (1996). The authors suggest using these polymers in different applications such as enhanced oil recovery. For these applications, it is essential to have a water soluble shear stable polymer that can possess high viscosity at very low concentration. It is known that rigid rod polymers can be of high viscosity at low molecular weight compared with the traditionally used flexible chain polymers such a hydrolyzed poly-acrylamides. New sulfonated water soluble aromatic polyamides, polyureas, and polyimides were prepared via interfacial or solution polymerization of sulfonated aromatic diamines with aromatic dianhydrides, diacid chlorides, or phosgene. Some of these polymers had sufficiently high molecular weight (< 200 000 according to GPC data), extremely high intrinsic viscosity (-65 dL/g), and appeared to transform into a helical coil in salt solution. These polymers have been evaluated in applications such as thickening of aqueous solutions, flocculation and dispersion stabilization of particulate materials, and membrane separation utilizing cast films.

W02009130675 discloses an organic compound, optical film and method of production thereof. A solution of the disclosed organic compound or its salts forms a lyotropic liquid crystal. The solution is capable of forming a solid optical retardation layer of positive A-type substantially transparent to electromagnetic radiation in the visible spectral range.

Emma Thorm-Csanyi and Peter Kraxner, "Synthesis of Thermotropic Liquid Crystalline All-Trans-p-Phenylenevinylene Oligomers via Two-step Metathesis", Macromol. Symp., 122, pp. 77 - 81, (1997) discloses liquid crystalline products of oligometric p-phenylenevinylene derivates prepared metathetically using a stable molybdenum carbene complex.

US Patent 4,7497,70 discloses wholly aromatic, mesomorphic polyesters giving a homogeneous liquid crystalline melt at below 320°C. The disclosed polyesters consist of different repeating units, wherein some of them comprise side groups selected from the list comprising -(CH2)5-CH3, -C-(CH3)3, and CH3.

US Patent application publication 2005/209429 A1 discloses main chain thermotropic liquid crystal esters, ester-imides, and ester-amides prepared from monomeric materials and end-capped with phenylacetylene, phenylmaleimide, or nadimide reactive end-groups.

Passmann M, et al, "Nematic Ionomers as Materials for the Build-up of Multilayers", Macromolecular Chemistry and Physics, Wiley-vch Verlag, Weinheim, De, vol. 199, no 2, 1 February 1998 discloses a synthetic route to semi-flexible polyesters exhibiting the phases glassy, nematic, isotropic, as well as their functionalization with ionic groups. As ionic groups the salts of sulfonic acids and phosphonic acids were used. These ionic LC-polymers (mostly ionomers) can be used for a multilayer build-up with amorphous poly-electrolytes.

Fujishiro K. et al, "Effect of Branched Methyl Group in Lateral Substituent of Main Chan Liquid Crystalline Polyesters", Polymer Journal, Society of Polymer Science, Tokyo, Jp, vol. 24, no. 12, 15 December 1992 (1992-12-15), pp. 1337-1343 discloses two polyesters containing a decamethylene spacer and a triad mesogen with 2-methyl-1-butoxy and n-butoxy substituents, prepared and characterized by wide angle X-ray diffraction, thermal and optical methods. These polyesters are used to investigate the effect of a branched methyl group in a lateral long-chain substituent on liquid crystalline properties

The present invention provides solutions to the above referenced disadvantages of the optical films for liquid crystal display or other applications, and discloses a new type of optical film, in particular, a uniaxial negative C-type plate and a biaxial $A_c$-type plate retardation layer, based on water-soluble rigid-core polymers and copolymers.

## SUMMARY OF THE INVENTION

The present invention provides an organic polymer compound of the general structural formula I:

$$\left[\begin{array}{cccc} R1_{m1} & R2_{m2} & R3_{m3} & R4_{m4} \\ | & | & | & | \\ \text{-Core1-G1-} & \text{(Core2-G2)}_{t2}\text{-} & \text{(Core3-G3)}_{t3}\text{-} & \text{(Core4-G4)}_{t4}\text{-} \end{array}\right]_n \quad , (I)$$

comprising n organic units, wherein the organic unit comprises conjugated organic components Core1, Core2, Core3 and Core4 capable of forming a rigid rod-like macromolecule; G1, G2, G3 and G4 are spacers selected from the list comprising -C(O)-NH-, -NH-C(O)-, -N=(C(O))2=, -O-NH-, linear and branched (C1-C4)alkylenes, linear and branched (C1-C4)alkenylenes, -O-CH2-, -CH2-O-, -CH=CH-, -CH=CH-C(O)O-, -O(O)C-CH=CH-, -C(O)-CH2-, -OC(O)-O-, -OC(O)-, -C=C-, -C(O)-S-, -S-, -S-C(O)-, -O-, -NH-, -N(CH3)-; R1, R2, R3 and R4 are lyophilic side-groups providing solubility to the organic polymer compound or its salts in a suitable solvent and which are the same or different and independently

selected from the list comprising -COOH, $-SO_3H$, and $-H_2PO_3$ for water or water-miscible solvent, and linear and branched (C1-C20) alkyl, (C2-C20) alkenyl, and (C2-C20) alkynyl for organic solvent; m1, m2, m3 and m4 are numbers of the lyophilic side-groups R1, R2, R3 and R4 in the conjugated organic components Core1, Core2, Core3 and Core4 accordingly which sum m =m1+m2+m3+m4 is equal to 1, 2, 3, 4, 5, 6, 7, or 8; wherein the number n is an integer in the range from 5 to 1000, and t2, t3 and t4 are numbers which are independently selected between 0 and 1, and a solution of the organic polymer compound is capable of forming a solid optical retardation layer of a negative C-type or Ac-type plate substantially transparent to electromagnetic radiation in the visible spectral range, and wherein the organic components Core1, Core2, Core3 and Core4 provide linearity and rigidity of the macromolecule, and the organic components, the lyophilic side groups and the number of the organic units control a ratio between mesogenic properties and viscosity of the solution.

In a further aspect, the present invention provides an optical film comprising a substrate having front and rear surfaces, and at least one solid retardation layer on the front surface of the substrate. Said solid retardation layer comprises an organic polymer compound of the general structural formula I:

$$\left[\begin{array}{c} \underset{\text{-Core1-}}{\overset{R1_{m1}}{|}}\text{G1-}(\underset{\text{Core2}}{\overset{R2_{m2}}{|}}\text{-G2})_{t2}\text{-}(\underset{\text{Core3}}{\overset{R3_{m3}}{|}}\text{-G3})_{t3}\text{-}(\underset{\text{Core4}}{\overset{R4_{m4}}{|}}\text{-G4})_{t4}\text{-} \end{array}\right]_n \quad ,\ (I)$$

comprising n organic units. The organic unit comprises conjugated organic components Core1, Core2, Core3 and Core4 capable of forming a rigid rod-like macromolecule. G1, G2, G3 and G4 are spacers selected from the list comprising -C (O)-NH-, -NH-C(O)-, -N=(C(O))2=, -O-NH-, linear and branched (C1-C4)alkylenes, linear and branched (C1-C4)alkenylenes, -O-CH2-, -CH2-O-, -CH=CH-, -CH=CH-C(O)O-, -O(O)C-CH=CH-, -C(O)-CH2-, -OC(O)-O-, -OC(O)-, -C≡C-, -C (O)-S-, -S-, -S-C(O)-, -O-, -NH-, -N(CH3)-. R1, R2, R3 and R4 are lyophilic side-groups providing solubility to the organic polymer compound or its salts in a suitable solvent and which are the same or different and independently selected from the list comprising -COOM, $-SO_3M$, $-HMPO_3$ and $-M_2PO_3$ for water or water-miscible solvent where counterion M is selected from a list comprising $H^+$, $Na^+$, $K^+$, $Li^+$, $Cs^+$, $Ba^{2+}$ $Ca^{2+}$, $Mg^{2+}$, $Sr^{2+}$, $Pb^{2+}$, $Zn^{2+}$, $La^{3+}$, $Ce^{3+}$, $Y^{3+}$, $Yb^{3+}$, $Gd^{3+}$, $Zr^{4+}$ and $NH_{4-k}Q_k^+$, where Q is independently selected from the list comprising linear and branched (C1-C20) alkyl, (C2-C20) alkenyl, (C2-C20) alkynyl, and (C6-C20)arylalkyl, and k is 0, 1, 2, 3 or 4. The parameters m1, m2, m3 and m4 are numbers of the lyophilic side-groups R1, R2, R3 and R4 in the conjugated organic components Core1, Core2, Core3 and Core4 accordingly which sum m =m1+m2+m3+m4 is equal to 1, 2, 3, 4, 5, 6, 7, or 8; wherein the number n is an integer in the range from 5 to 1000. The parameters t2, t3 and t4 are numbers which are independently selected between 0 and 1. The solid optical retardation layer is a negative C-type or Ac-type plate substantially transparent to electromagnetic radiation in the visible spectral range. The organic components Core1, Core2, Core3 and Core4 provide linearity and rigidity of the macromolecule, and the organic components, the lyophilic side groups and the number of the organic units control a ratio between mesogenic properties and viscosity of the solution.

In yet further aspect, the present invention provides a method of producing an optical film, comprising the following steps: a) preparation of a solution of an organic polymer compound of the general structural formula I or a salt thereof:

$$\left[\begin{array}{c} \underset{\text{-Core1-}}{\overset{R1_{m1}}{|}}\text{G1-}(\underset{\text{Core2}}{\overset{R2_{m2}}{|}}\text{-G2})_{t2}\text{-}(\underset{\text{Core3}}{\overset{R3_{m3}}{|}}\text{-G3})_{t3}\text{-}(\underset{\text{Core4}}{\overset{R4_{m4}}{|}}\text{-G4})_{t4}\text{-} \end{array}\right]_n \quad ,\ (I)$$

comprising n organic units, wherein the organic unit comprises conjugated organic components Core1, Core2, Core3 and Core4 capable of forming a rigid rod-like macromolecule; G1, G2, G3 and G4 are spacers selected from the list comprising -C(O)-NH-, -NH-C(O)-, -N=(C(O))2=, -O-NH-, linear and branched (C1-C4)alkylenes, linear and branched (C1-C4)alkenylenes, -O-CH2-, -CH2-O-, -CH=CH-, -CH=CH-C(O)O-, -O(O)C-CH=CH-, -C(O)-CH2-,-OC(O)-O-, -OC (O)-, -C≡C-, -C(O)-S-, -S-, -S-C(O)-, -O-, -NH-, -N(CH3)-. R1, R2, R3 and R4 are lyophilic side-groups providing solubility

to the organic polymer compound or its salts in a suitable solvent and which are the same or different and independently selected from the list comprising -COOH, $-SO_3H$, and $-H_2PO_3$ for water or water-miscible solvent, and linear and branched (C1-C20) alkyl, (C2-C20) alkenyl, and (C2-C20) alkynyl for organic solvent; the parameters m1, m2, m3 and m4 are numbers of the lyophilic side-groups R1, R2, R3 and R4 in the conjugated organic components Core1, Core2, Core3 and Core4 accordingly which sum m =m1+m2+m3+m9 is equal to 1, 2, 3, 4, 5, 6, 7, or 8; wherein the number n is an integer in the range from 5 to 1000; and the parameters t2, t3 and t4 are numbers which are independently selected between 0 and 1; b) application of a liquid layer of the solution onto a substrate, wherein the liquid layer is substantially transparent for electromagnetic radiation in the visible spectral range; and c) drying to form a solid optical retardation layer, wherein during the drying step there is a fast increase of a viscosity of the solution without mesophase formation. The organic components Core1, Core2, Core3 and Core4 provide linearity and rigidity of the macromolecule, and the organic components, the lyophilic side groups and the number of the organic units control a ratio between mesogenic properties and viscosity of the solution.

## BRIEF DESCRIPTION OF THE DRAWINGS

Figure 1 (prior art) schematically illustrates the arrangement of rigid chain polymer molecules on a substrate;

Figure 5 shows the principal refractive indices' spectra of the organic retardation layer prepared with 2,2'-disulfo-4,4'-benzidine terephthalamide-isophthalamide copolymer cesium salt on a glass substrate; terephthalamide/isophthalamide molar ratio in the copolymer 50:50;

Figure 6 shows the viscosity vs. shear rate dependence of 2,2'-disulfo-4,4'-benzidine terephthalamide-isophthalamide copolymer cesium salt aqueous solution; terephthalamide/isophthalamide molar ratio in the copolymer 50:50;

Figure 7 shows the principal refractive indices' spectra of the organic retardation layer prepared with 2,2'-disulfo-4,4'-benzidine terephthalamide-isophthalamide copolymer cesium salt on a glass substrate; terephthalamide/isophthalamide molar ratio in the copolymer 75:25;

Figure 8 shows a polarizing microscopy image of the lyotropic liquid crystal solution texture of 2,2'-disulfo-4,4'-benzidine terephthalamide-isophthalamide copolymer cesium salt (concentration is approximately 6 wt.%); terephthalamide/isophthalamide molar ratio in the copolymer 92:8;

Figure 9 shows a polarizing microscopy image of the optical film comprising solid optical retardation layer produced with Mayer rod coating method and comprising2,2'-disulfo-4,4'-benzidine terephthalamide-isophthalamide copolymer cesium salt; terephthalamide/isophthalamide molar ratio in the copolymer 92:8;

Figure 10 shows the principal refractive indices spectra of the organic retardation layer prepared with 2,2'-disulfo-4,4'-benzidine terephthalamide-isophthalamide copolymer cesium salt on a glass substrate; terephthalamide/isophthalamide molar ratio in the copolymer 92:8; and

Figure 11 shows the principal refractive indices spectra of the organic retardation layer prepared with poly(2,2'disulpho-4,4'benzidine 1,4,5, naphthalene tetracarboxylic acid diimid) triethylammonium/lithium salt on a glass substrate.

## DETAILED DESCRIPTION OF THE INVENTION

The general description of the present invention having been made, a further understanding can be obtained by reference to the specific preferred embodiments, which are given herein only for the purpose of illustration and are not intended to limit the scope of the appended claims.

Definitions of various terms used in the description and claims of the present invention are listed below.

The term "visible spectral range" refers to a spectral range having the lower boundary approximately equal to 400 nm, and upper boundary approximately equal to 700 nm.

The term "retardation layer" refers to an optically anisotropic layer which is characterized by three principal refractive indices ($n_x$, $n_y$ and $n_z$), wherein two principal directions for refractive indices $n_x$ and $n_y$ belong to xy-plane coinciding with a plane of the retardation layer and one principal direction for refractive index ($n_z$) coincides with a normal line to the retardation layer.

The term "optically anisotropic biaxial retardation layer" refers to an optical layer which refractive indices $n_x$, $n_y$, and $n_z$ obey the following condition in the visible spectral range: $n_x \neq n_z \neq n_y$.

The term "optically anisotropic retardation layer of $A_C$-type" refers to an optical layer which refractive indices $n_x$, $n_y$, and $n_z$ obey the following condition in the visible spectral range: $n_z < n_y < n_x$.

The term "optically anisotropic retardation layer of negative C-type" refers to an optical layer which refractive indices $n_x$, $n_y$, and $n_z$ obey the following condition in the visible spectral range: $n_z < n_x = n_y$.

The term "NZ-factor" refers to the quantitative measure of degree of biaxiality which is calculated as follows:

$$NZ = \frac{Max(n_x, n_y) - n_z}{Max(n_x, n_y) - Min(n_x, n_y)}$$

The above mentioned definitions are invariant to rotation of system of coordinates (of the laboratory frame) around of the vertical z-axis for all types of anisotropic layers.

As used herein, a "front substrate surface" refers to a surface facing a viewer. A "rear substrate surface" refers to the surface opposite to the front surface.

The present invention provides an organic polymer compound as disclosed hereinabove. In one embodiment of the disclosed organic polymer compound, the organic components

The present invention provides an organic polymer compound as disclosed hereinabove. In the disclosed organic polymer compound, the organic components Core1, Core2, Core3 and Core4 provide linearity and rigidity of the macromolecule, and the organic components, the sets of lyophilic side groups $R_m$ and the number of the organic units n control a ratio between mesogenic properties and viscosity of the solution. The selection of organic components Core1, Core2, Core3 and Core4, the lyophilic side-groups R1, R2, R3 and R4 and number of organic units n determines the type and birefringence of the optical film.

In another embodiment of the disclosed organic polymer compound, the organic units are the same. In yet another embodiment of the disclosed organic polymer compound, at least one said organic unit is different and the copolymer is formed.

In still another embodiment of the present invention, the organic components Core1, Core2, Core3 and Core4 are having general structural formulas independently selected from the list comprising general formulas II to VIII shown in Table 1.

Table 1 Examples of the structural formulas of conjugated organic components Core1, Core2, Core3 and Core4.

| | |
|---|---|
| 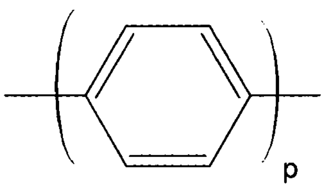 | (II) |
| 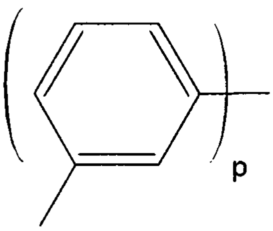 | (III) |
| 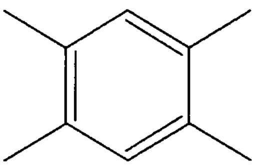 | (IV) |
| 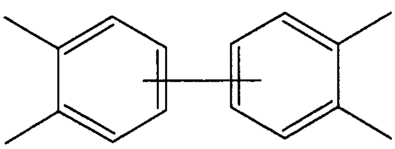 | (V) |

(continued)

| | |
|---|---|
| 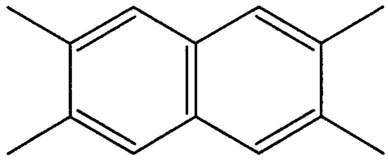 | (VI) |
| 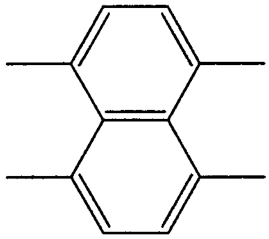 | (VII) |
| 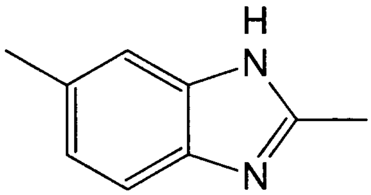 | (VIII) |

where p is equal to 1, 2, 3, 4, 5 or 6.
In still another embodiment a composition is provided which comprises an organic polymer compound of the structural formula I, where $t_2$ is equal to 1, $t_3 = t_4 = 0$, m1 = 0 and m2 = 2, Core1 is selected from the general formulas II, III, where p = 1, V, VII and VIII; the organic component Core2 has the general formula II, where p = 2, the lyophilic side-group R2 is sulfo-group $SO_3H$; the spacer G1 is selected from the list comprising - C(O)- NH - and =2(C(O))=N-; and the spacer G2 is selected from the list comprising - C(O)-, -NH-C(O)-, -N=(C(O))2=. Examples of the organic polymer compound are shown in Table 2 including the structural formulas 1 to 6.

Table 2. Examples of the structural formulas of the organic compounds according to the present invention.

| | |
|---|---|
| 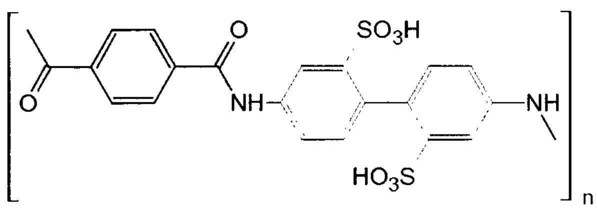<br>poly(2,2'-disulfo-4,4'-benzidine terephthalamide) | (1) |
| 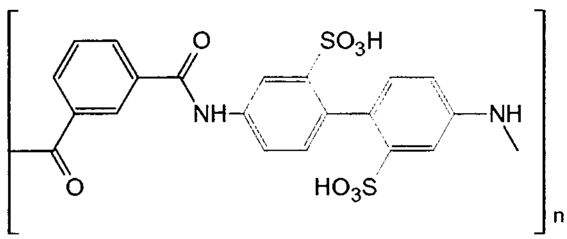<br>poly(2,2'-disulfo-4,4'-benzidine isophthalamide) | (2) |
| 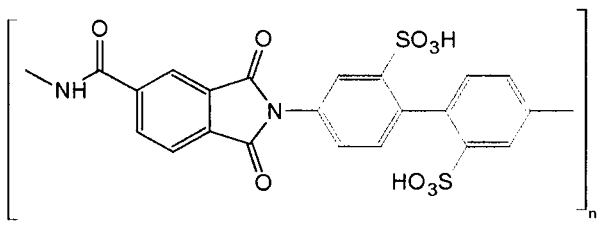<br>poly(2,2'-disulfo-4,4'-benzidine 1,3-dioxo-isoindoline-5-carboxamide) | (3) |

(continued)

| | |
|---|---|
| 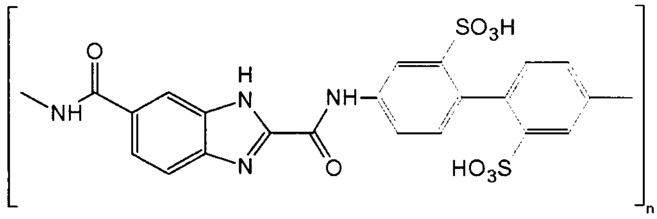<br>poly(2,2'-disulfo-4,4'-benzidine 1H-benzimidazole-2,5-dicarboxamide) | (4) |
| 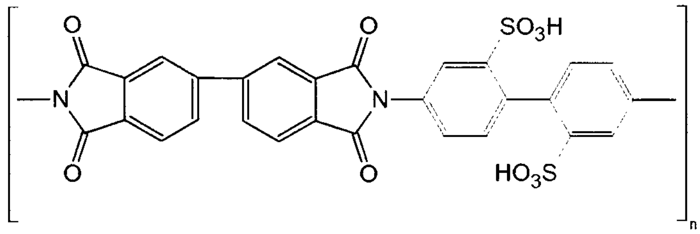<br>poly(2,2'-disulfo-4,4'-benzidine 3,3',4,4'-biphenyl tetracarboxylic acid diimide) | (5) |
| 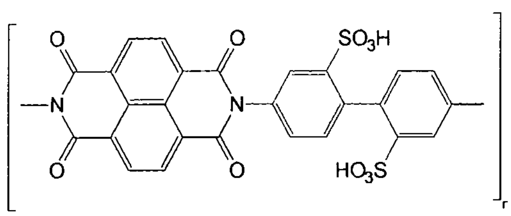<br>poly(2,2'disulpho-4,4'benzidine 1,4,5,8-naphtalene tetracarboxylic acid diimide) | (6) |

In one embodiment of the disclosed organic polymer compound, the salt of the organic polymer compound is selected from the list comprising alkaline metal salts, ammonium and alkyl-substituted ammonium salts. The solvent may be selected from the list comprising water, alkaline aqueous solutions, dimethylsulfoxide, dimethylformamide, dimethylacetamide, tetrahydrofurane, dioxane, and combination thereof.

The present invention also provides the optical film as disclosed hereinabove. The retardation layer type and birefringence may be determined by rigidity and length of the rod-like macromolecules, and the ratio between mesogenic properties and the viscosity of the solution are controlled by selection of the organic components Core1, Core2, Core3 and Core4, the lyophilic side-groups R1, R2, R3 and R4 and the number of the organic units n. In one embodiment of the disclosed optical film, the retardation layer birefringence is not less than approximately 0. 01. In still another embodiment of the disclosed optical film, the organic units are the same. In yet another embodiment of the disclosed optical film, at least one said organic unit is different and the copolymer is formed.

In still another embodiment of the optical film, the organic components Core1, Core2, Core3 and Core4 are having general structural formulas independently selected from the list comprising general formulas II to VIII shown in Table 1. In still another embodiment of the disclosed optical film, the organic polymer compound has a structural formula I, where $t_2$ is equal to 1, $t_3 = t_4 = 0$, m1 = 0 and m2 = 2; the organic component Core1 is selected from the general formulas II, III, where p = 1, V, VII and VIII; the organic component Core2 has the general formula II, where p = 2, the lyophilic side-group R2 is sulfo-group $SO_3H$; the spacer G1 is selected from the list comprising -C(O)- NH - and =2(C (O))=N-; and the spacer G2 is selected from the list comprising -C(O)-, -NH-C(O)-, -N=(C(O))2=. The examples of the structural formulas of the organic polymer compound are shown in Table 2.

In one embodiment of the disclosed optical film, the salt of the organic polymer compound is selected from the list comprising alkaline metal salts, triethylammonium salt and ammonium salt. The disclosed optical film may further comprise inorganic compounds which are selected from the list comprising hydroxides and salts of alkaline metals. In one embodiment of the disclosed optical film, the solid retardation layer is an uniaxial retardation layer possessing two refractive indices ($n_x$ and $n_y$) corresponding to two mutually perpendicular directions in the plane of the substrate and one refractive index ($n_z$) in the normal direction to the plane of the substrate, and wherein the refractive indices obey the following condition: $n_z < n_x = n_y$. In another embodiment of the disclosed optical film, the solid retardation layer is a biaxial retardation layer possessing two refractive indices ($n_x$ and $n_y$) corresponding to two mutually perpendicular directions in the plane of the substrate and one refractive index ($n_z$) in the normal direction to the plane of the substrate, and wherein the refractive indices obey the following condition: $n_z < n_y < n_x$. In yet another embodiment of the disclosed

optical film, the substrate comprises material selected from the list comprising polymer and glass.

The present invention provides also the method of producing the optical film as disclosed hereinabove. In one embodiment of the disclosed method, the organic components Core1, Core2, Core3 and Core4 provide linearity and rigidity of the macromolecule, and the organic components, the lyophilic side groups and the number of the organic units control a ratio between mesogenic properties and viscosity of the solution. The selection of organic components Core1, Core2, Core3 and Core4, the lyophilic side-groups R1, R2, R3 and R4 and the number of orgabic units n determines the type and birefringence of the optical film.

In another embodiment of the disclosed method, the organic units are the same. In yet another embodiment of the disclosed method, at least one said organic unit is different and the copolymer is formed.

In still another embodiment of the method, the organic components Core1, Core2, Core3 and Core4 are having general structural formulas independently selected from the list comprising general formulas II to VIII shown in Table 1.

In one embodiment of the disclosed method, the organic polymer compound has a structural formula I, where $t_2$ is equal to 1, $t_3 = t_4 = 0$, m1 = 0 and m2 = 2; the organic component Core1 is selected from the general formulas II, III (with p = 1), V, VII and VIII; the organic component Core2 has the general formula II (with p = 2), the lyophilic side-group R2 is sulfo-group $SO_3H$; the spacer G1 is selected from the list comprising -C(O)- NH - and =2(C(O))=N-; and the spacer G2 is selected from the list comprising -C(O)-, -NH-C(O)-, -N=(C(O))2= and wherein the organic polymer compound is selected from the structural formulas 1 to 6 shown in Table 2.

In one embodiment of the disclosed method, the salt of the organic polymer compound is selected from the list comprising alkaline metal salts, triethylammonium salt and ammonium salt. In another embodiment of the disclosed method, the substrate comprising material is selected from the list comprising polymer and glass. In yet another embodiment of the present invention, the disclosed method further comprises a post-treatment step comprising a treatment of the layer with a solution of any water-soluble inorganic salt with a cation selected from the list comprising $H^+$, $Ba^{2+}$, $Pb^{2+}$, $Ca^{2+}$, $Mg^{2+}$, $Sr^{2+}$, $La^{3+}$, $Zn^{2+}$, $Zr^{4+}$, $Ce^{3+}$, $Y^{3+}$, $Yb^{3+}$, $Gd^{3+}$ and any combination thereof. The solvent may be selected from the list comprising water, alkaline aqueous solutions, dimethylsulfoxide, dimethylformamide, dimethylacetamide, tetrahydrofurane, dioxane, and combination thereof.

In one embodiment of the disclosed method, the application step is carried out using coating technique selected from the list comprising Mayer rod, slot die, extrusion, roll coating, knife coating, spray-coating, printing and molding. In another embodiment of the disclosed method, the sequence of the method steps is repeated two or more times and the solution used in the fabrication of each subsequent solid retardation layer is either the same or different from that used in the previous sequence of the steps.

In order that the invention may be more readily understood, reference is made to the following examples, which are intended to be illustrative of the invention, but are not intended to be limiting the scope.

## EXAMPLES

<u>Example 1</u>

This example describes synthesis of poly(2,2'-disulfo-4,4'-benzidine isophthalamide) cesium salt (structure 2 in Table 2).

## EXAMPLES

<u>Example 1</u>

This example describes synthesis of poly(2,2'-disulfo-4,4'-benzidine isophthalamide) cesium salt (structure 2 in Table 2).

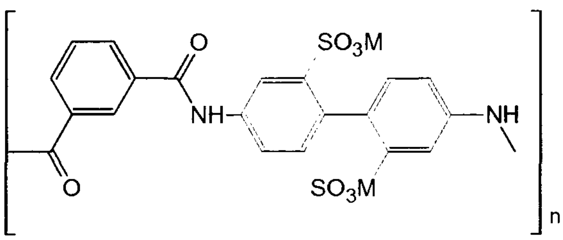

1.377 g (0.004 mol) of 4,4'-diaminobiphenyl-2,2'-disulfonic acid was mixed with 1.2 g (0.008 mol) of Cesium hydroxide monohydrate and 40 ml of water and stirred with dispersing stirrer till dissolving. 0.672 g (0.008 mol) of sodium bicarbonate

was added to the solution and stirred. While stirring the obtained solution at high speed (2500 rpm) a solution of 0.812 g (0.004 mol) of isophthaloyl dichloride (IPC) in dried toluene (15 mL) was gradually added within 5 minutes. The stirring was continued for 5 more minutes, and viscous white emulsion was formed. Then the emulsion was diluted with 40 ml of water, and the stirring speed was reduced to 100 rpm. After the reaction mass has been homogenized the polymer was precipitated via adding 250 ml of acetone. Fibrous sediment was filtered and dried.

Weight average molar mass of the polymer samples was determined by gel permeation chromatography (GPC) analysis of the sample was performed with Hewlett Packard (HP) 1050 chromatographic system. Eluent was monitored with diode array detector (DAD HP 1050 at 305 nm). The GPC measurements were performed with two columns TSKgel G5000 PWXL and G6000 PWXL in series (TOSOH Bioscience, Japan). The columns were thermostated at 40 °C. The flow rate was 0.6 mL/min. Poly(sodium-p-styrenesulfonate) was used as GPC standard. Varian GPC software Cirrus 3.2 was used for calculation of calibration plot, weight-average molecular weight, Mw, number-average molecular weight, Mn, and polydispersity (D=Mw/Mn). The eluent was mixture of 0.1 M phosphate buffer (pH = 7.0) and acetonitrile in the ratio 80/20, respectively. The Mw, Mn, and polydispersity (D) of polymer were 720 000, 80 000, and 9, respectively.

Example 2

Example 2 describes synthesis of 2,2'-disulfo-4,4'-benzidine terephthalamide-isophthalamide copolymer cesium salt (copolymer of structures 1 and 2 in Table 2).

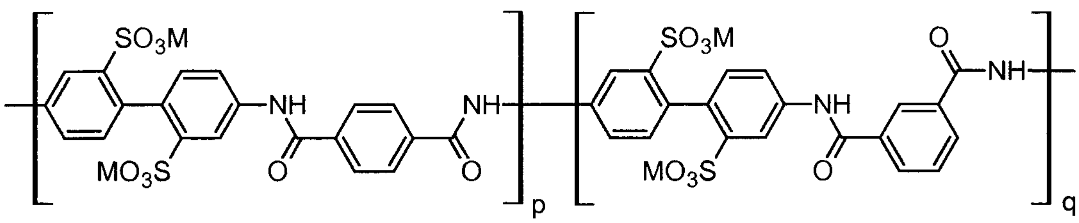

The same method of synthesis can be used for preparation of the copolymers of different molar ratio.

4.098 g (0.012 mol) of 4,4'-diaminobiphenyl-2,2'-disulfonic acid was mixed with 4.02 g (0.024 mol) of cesium hydroxide monohydrate in water (150 ml) in a 1 L beaker and stirred until the solid was completely dissolved. 3.91 g (0.012 mol) of sodium carbonate was added to the solution and stirred at room temperature until dissolved. Then toluene (25 ml) was added. Upon stirring the obtained solution at 7000 rpm, a solution of 2.41 g (0.012 mol) of terephthaloyl chloride (TPC) and 2.41 g (0.01 2 mol) of isophthaloyl chloride (IPC) in toluene (25 ml) were added. The resulting mixture thickened in about 3 minutes. The stirrer was stopped, 150 ml of ethanol was added, and the thickened mixture was crushed with the stirrer to form slurry suitable for filtration. The polymer was filtered and washed twice with 150-ml portions of 90% aqueous ethanol. Obtained polymer was dried at 75°C. The material was characterized with absorbance spectrum presented at Figure 2. The GPC molecular weight analysis of the sample was performed as described in Example 1.

Example 3

Example 3 describes synthesis of poly(2,2'disulpho-4,4'benzidine 1,4,5,8-naphtalen tetracarboxylic acid diimid) triethylammonium salt (structure 6 in Table 2).

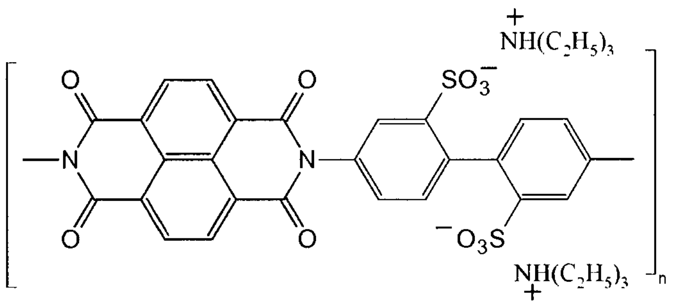

4.023 g (0.015mol) of 1,4,5,8-naphtaline tetracarbonic acid dianhydride and 5.165 g (0.015mol) of 2,2'-disulfobenzidine and 0.6 g of benzoic acid (catalyst) are charged into a three-neck flask equipped with an agitator and a capillary tube for argon purging. With argon flow turned on 40 ml of molten phenol is added to the flask. Then the flask is placed in a

water bath at 80°C, and the content is agitated until homogeneous mixture is obtained. 4.6 ml of triethylamine is added to the mixture, and agitation is kept on for 1 hour to yield solution. Then temperature is raised successively to 100,120, and 150°C. At 100 and 120 centigrade agitation is held for 1 hour at each temperature. During this procedure the solution keeps on getting thicker. Time of agitation at 150°C is 4 to 6 hrs.

The thickened solution is diluted with liquid phenol (mixture of water/phenol=1/10 by volume), until target consistency at 100°C is obtained, and the resulting mixture is quenched with acetone. The material was characterized with absorbance spectrum shown in Figure 3.

Weight average molar mass of the polymer samples was determined by gel permeation chromatography (GPC). The GPC analysis of the polymer samples was performed with Hewlett Packard 1050 HPLC system, and with the diode array detector($\lambda$=380 nm). The chromatographic separation was done using OHpak SB-804 HQ column from Shodex. Mixture of dimethyl sulfoxide (DMSO) and dimethylformamide (DMF) in proportion of (75:25) respectively, with addition of 0.05M of lithium chloride (LiCl) was used as the mobile phase. Chromatographic data were collected and processed using the ChemStation B10.03 (Agilent Technologies) and GPC software Cirrus 3.2 (Varian). Poly(styrenesulfonic acid) sodium salt was used as a GPC standard. Before the GPC analysis all samples of the analyzed polymer and the standards were dissolved in DMSO in the concentration of approximately 1 mg/mL.

Example 4

Example 4 describes synthesis of poly(2,2'-disulfo-4,4'-benzidine 1,3-dioxo-isoindoline-5-carboxamide) cesium salt (structure 3 in Table 2).

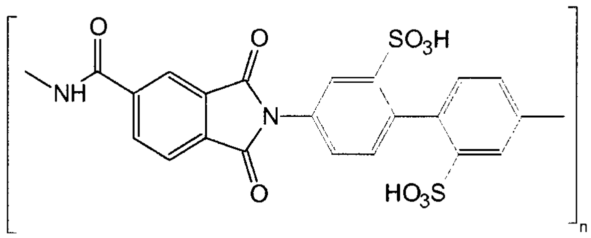

2,5-Diaminobenzene-1,4-disulfonic acid (0.688 g, 2.0 mmol), anhydrous N-methylpyrrolidone (10 mL), triethylamine (0.86 mL) and trimellitic anhydride chloride (0.421 g, 2 mmol) were charged subsequently into a two-neck flask equipped with a magnetic stirrer, thermometer and air condenser with argon inlet. The reaction mixture was then heated up to approximately 130-140 °C and stirred for 24 hours. Then the reaction mixture was cooled to room temperature and the product was coagulated by slowly dripping the mixture into isopropanol with stirring by magnetic stirrer. The precipitate was collected by vacuum filtration and then suspended in methanol (50 mL) and filtered off. The brown solid was air dried for several hours and then vacuum dried at ~60 °C for 2 hours under $P_2O_5$ to constant weight 0.16 g.

Weight average molar mass of the polymer samples was determined by gel permeation chromatography (GPC). The GPC analysis of the polymer samples was performed with Hewlett Packard 1050 HPLC system, and with the diode array detector ($\lambda$=230nm). The chromatographic separation was done using the TSKgel lyotropic G5000 $PW_{XL}$ column, (TOSOH Bioscience). Mixture of phosphate buffer 0.1 M (pH=6.9-7.0) and acetonitrile was used as the mobile phase. Chromatographic data were collected and processed using the ChemStation B10.03 (Agilent Technologies) and GPC software Cirrus 3.2 (Varian). Poly(styrenesulfonic acid) sodium salt was used as a GPC standard.

Example 5

Example 5 describes preparation of a solid optical retardation layer of negative C-type from a solution of poly (2,2'-disulfo-4,4'-benzidine isophthalamide).

2 g of poly(2,2'-disulfo-4,4'-benzidine isophthalamide) cesium salt produced as described in Example 1 was dissolved in 100 g of de-ionized water (conductivity ~5 $\mu$Sm/cm); the suspension was mixed with a magnet stirrer. After dissolving, the solution was filtered at the hydrophilic filter of a 45 $\mu$m pore size and evaporated to the viscous isotropic solution of concentration of solids of about 6%.

Fisher brand microscope glass slides were prepared for coating by soaking in a 10% NaOH solution for 30 min, rinsing with deionized water, and drying in airflow with the compressor. At temperature of 22 °C and relative humidity of 55% the obtained LLC solution was applied onto the glass panel surface with a Gardner® wired stainless steel rod #14, which was moved at a linear velocity of about 10 mm/s. The optical film was dried with a flow of the compressed air. The drying was not accompanied with any temperature treatment and took no more than several minutes.

In order to determine the optical characteristics of the solid optical retardation layer, transmission and reflection

spectra were measured in a wavelength range from 400 to 700 nm using and Cary 500 Scan spectrophotometer. Optical transmission and reflection of the retardation layer was measured using light beams linearly polarized parallel and perpendicular to the coating direction ($T_{par}$ and $T_{per}$, respectively). The obtained data were used for calculation of the in-plane refractive indices ($n_x$ and $n_y$,). Optical retardation spectra at different incident angles were measured in a wavelength range from 400 to 700 nm using Axometrics Axoscan Mueller Matrix spectropolarimeter, and out-of-plane refractive index ($n_z$) was calculated using these data and the results of the physical thickness measurements using Dectak$^3$ST electromechanical profilometer. The obtained solid optical retardation layer was characterized by the thickness equal to approximately 750 nm and the principle refractive indices, which obey the following condition: $n_z < n_y \approx n_x$. Out-of-plane birefringence, equals to 0.09. The principal refractive indices spectral dispersion is shown in Figure 4.

Example 6

Example 6 describes preparation of a solid optical retardation layer of negative C-type with 2,2'-disulfo-4,4'-benzidine terephthalamide-isophthalamide copolymer (terephthalamide/isophthalamide molar ratio 50:50) prepared as described in Example 2.

2 g of poly(2,2'-disulfo-4,4'-benzidine terephthalamide-isophthalamide copolymer) cesium salt produced as described in Example 2a was dissolved in 100 g of de-ionized water (conductivity -5 μSm/cm). The suspension was mixed with a magnet stirrer. After dissolving, the solution was filtered with the hydrophilic filter with a 45μm pore size and evaporated to the viscous isotropic solution of the concentration of solids of about 6%.

The coatings were produced and optically characterized, as was described in Example 5. The refractive indices spectral dependences are presented in Figure 5. The obtained solid optical retardation layer is characterized by thickness equal to approximately 800 nm and the principle refractive indices which obey the following condition: $n_z < n_y \approx n_x$.. Out-of-plane birefringence equals to 0.11.

Figure 6 shows the viscosity vs. shear rate dependence of the solution measured using stress-controlled AR 550 rheometer. Measurements were performed at 25°C. Cone-and-plate geometry (cone diameter = 60 mm, gap = 2°) was used.

Example 7

Example 7 describes preparation of a solid optical retardation layer of negative C-type with 2,2'-disulfo-4,4'-benzidine terephthalamide-isophthalamide copolymer (terephthalamide/isophthalamide molar ratio 75:25) prepared as described in Example 2.

2 g of poly(2,2'-disulfo-4,4'-benzidine terephthalamide-isophthalamide copolymer) cesium salt produced as described in Example 2b was dissolved in 100 g of de-ionized water (conductivity ~5 μSm/cm). The suspension was mixed with a magnet stirrer. After dissolving, the solution was filtered with the hydrophilic filter with a 45μm pore size and evaporated to the viscous isotropic solution of the concentration of solids of about 6%.

The coatings were produced and optically characterized as described in Example 5. The refractive indices spectral dependences are presented in Figure 7. The obtained solid optical retardation layer is characterized by thickness equal to approximately 800 nm and the principle refractive indices which obey the following condition: $n_z < n_y \approx n_x$.. Out-of-plane birefringence equals to 0.14.

Example 8

Example 8 describes preparation of a solid optical retardation layer of Ac-plate type with 2,2'-disulfo-4,4'-benzidine terephthalamide-isophthalamide copolymer (terephthalamide/isophthalamide molar ratio 92:8) prepared as described in Example 2.

2 g of poly(2,2'-disulfo-4,4'-benzidine terephthalamide-isophthalamide copolymer) cesium salt produced as described in Example 2a was dissolved in 100 g of de-ionized water (conductivity ~5 μSm/cm), and the suspension was mixed with a magnet stirrer. After dissolving, the solution was filtered with the hydrophilic filter of a 45μm pore size and evaporated to form viscous birefringent solution of concentration of solids of approximately 6%. The polarized microscopy image of LLC solution is presented in Figure 8.

The coatings were produced and optically characterized as described in example 6, but the Mayer rod #8 was used. The polarized microscopy image of the optical film is presented in Figure 9. The refractive indices spectral dependences are presented in Figure 10. The obtained solid optical retardation layer is characterized by thickness of approximately 350 nm and the principle refractive indices which obey the condition: $n_z < n_y < n_x$.. NZ-factor equals to 2.0.

Example 9

Example 9 describes of a solid optical retardation layer of negative C-type with poly(2,2'disulpho-4,4'benzidine 1,4,5,8- naphtalene tetracarboxylic acid diimid).

2 g of poly(2,2'disulpho-4,4'benzidine 1,4,5,8- naphtalene tetracarboxylic acid diimid) triethylammonium salt was dissolved in 50 g of dimethylsulfoxide, and the suspension was mixed with a magnet stirrer until complete dissolving.

The coatings were produced and optically characterized as described in Example 6. The obtained solid optical retardation layer is characterized by the thickness of approximately 500 nm and the principle refractive indices which obey the condition: $n_z < n_y \approx n_x$.. Out-of-plane birefringence equals to 0.11.

Example 10

Example 10 describes preparation of a solid optical retardation layer of negative C-type with poly(2,2'disulpho-4,4'benzidine 1,4,5,8- naphtalene tetracarboxylic acid diimid).

2 g of poly(2,2'disulpho-4,4'benzidine 1,4,5,8- naphtalene tetracarboxylic acid diimid) triethylammonium salt was dissolved in 100 g of 0.07% LiOH aqueous solution (pH ~ 11), and the suspension was mixed with a magnet stirrer. After dissolving, the solution was filtered with the hydrophilic filter of a 45μm pore size and evaporated to the viscous isotropic solution of concentration of solids of approximately 4%.

The coatings were produced and optically characterized as described in Example 6. The obtained solid optical retardation layer is characterized by the thickness of approximately 500 nm and the principle refractive indices which obey the condition: $n_z < n_y \approx n_x$.. The refractive indices spectral dependences are presented in Figure 11. Out-of-plane birefringence equals to 0.11.

Example 11

Example 11 describes preparation of a solid optical retardation layer of negative C-type with poly(2,2'-disulfo-4,4'-benzidine 1,3-dioxo-isoindoline-5-carboxamide).

2 g of poly(2,2'-disulfo-4,4'-benzidine 1,3-dioxo-isoindoline-5-carboxamide) cesium salt was dissolved in 100 g of de-ionized water (conductivity -5 μSm/cm), and the suspension was mixed with a magnet stirrer. After dissolving, the solution was filtered with the hydrophilic filter of a 45μm pore size and evaporated to the viscous isotropic solution of the concentration of solids of approximately 4%.

The coatings were produced and optically characterized as described in Example 6. The obtained solid optical retardation layer is characterized by the thickness of approximately 500 nm and the principle refractive indices which obey the condition: $n_z < n_y \approx n_x$.. Out-of-plane birefringence equals to 0.11.

## Claims

1. An organic polymer compound of the general structural formula I:

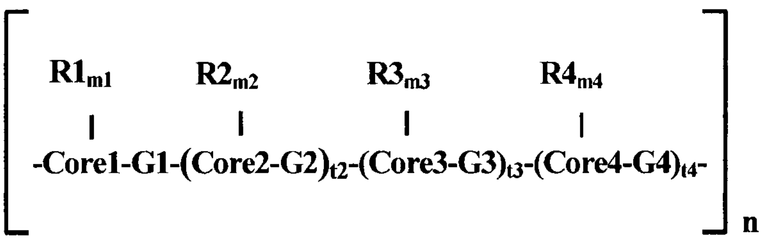

, (I)

comprising n organic units,
where the organic unit comprises conjugated organic components Core1, Core2, Core3 and Core4 capable of forming a rigid rod-like macromolecule, G1, G2, G3 and G4 are spacers selected from the list comprising -C(O)-NH-, -NH-C(O)-, -N=(C(O))2=, -O-NH-, linear and branched (C1-C4)alkylenes, linear and branched (C1-C4)alkenylenes, -O-CH2-, -CH2-O-, -CH=CH-, -CH=CH-C(O)O-, -O(O)C-CH=CH-, -C(O)-CH2-, -OC(O)-O-, -OC(O)-, -C=C-, -C(O)-S-, -S-, -S-C(O)-, -O-, -NH-, -N(CH3)-; R1, R2, R3 and R4 are lyophilic side-groups providing solubility to the organic polymer compound or its salts in a suitable solvent and which are the same or different and independently selected from the list comprising -COOH, $-SO_3H$, and $-H_2PO_3$ for water or water-miscible solvent, and linear and

branched (C1-C20) alkyl, (C2-C20) alkenyl, and (C2-C20) alkynyl for organic solvent; m1, m2, m3 and m4 are numbers of the lyophilic side-groups R1, R2, R3 and R4 in the conjugated organic components Core1, Core2, Core3 and Core4 accordingly, which sum m =m1+m2+m3+m4 is equal 1, 2, 3, 4, 5, 6, 7, or 8; wherein the number n is an integer in the range from 5 to 1000,
and
t2, t3 and t4 are numbers which are independently selected between 0 and 1, wherein a solution of the organic polymer compound is capable of forming a solid optical retardation layer of a negative C-type or Ac-type plate substantially transparent to electromagnetic radiation in the visible spectral range;
wherein the organic components Core1, Core2, Core3 and Core4 provide linearity and rigidity of the macromolecule, and the organic components, the lyophilic side groups and the number of the organic units control a ratio between mesogenic properties and viscosity of the solution.

**2.** An organic polymer compound according to Claim 1, wherein the organic units are the same or at least one said organic unit is different.

**3.** An organic polymer compound according to claim 1 or 2 wherein the organic components Core1, Core2, Core3 and Core4 have general structural formulas independently selected from the list comprising general formulas II to VIII:

| | |
|---|---|
| 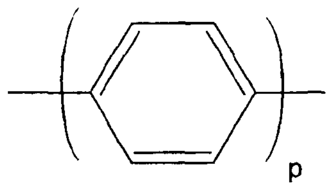 | (II) |
| 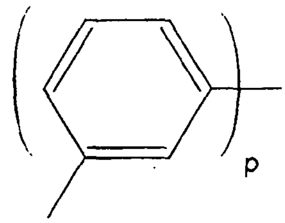 | (III) |
| 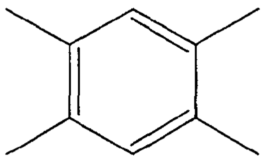 | (IV) |
| 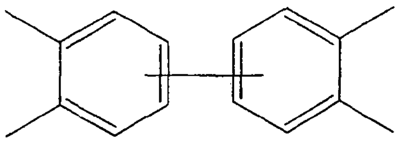 | (V) |
| 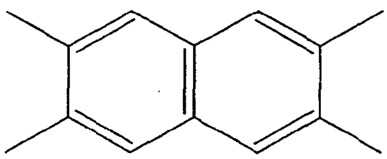 | (VI) |
| 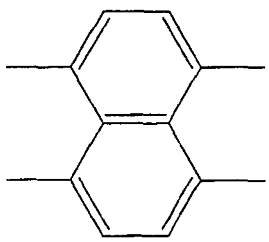 | (VII) |

(continued)

| | |
|---|---|
| 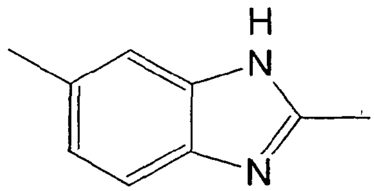 | (VIII) |

where p is equal to 1, 2, 3, 4, 5 or 6.

**4.** An organic polymer compound according to any of Claims 1 to 3 having a structural formula I, where $t_2$ is equal to 1, $t_3 = t_4 = 0$, m1 = 0 and m2 = 2; the organic component Core1 is selected from the general formulas II, III, where p = 1, V, VII and VIII; the organic component Core2 has the general formula II, where p = 2, the lyophilic side-group R2 is sulfo-group $SO_3H$; the spacer G1 is selected from the list comprising -C(O)- NH - and =2(C(O))=N-; and the spacer G2 is selected from the list comprising -C(O)-, -NH-C(O)-, -N=(C(O))2=; and wherein the organic polymer compound is selected from the structural formulas 1 to 6:

| | |
|---|---|
| 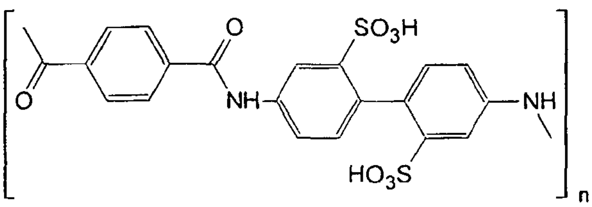<br>poly(2,2'-disulfo-4,4'-benzidine terephthalamide) | (1) |
| 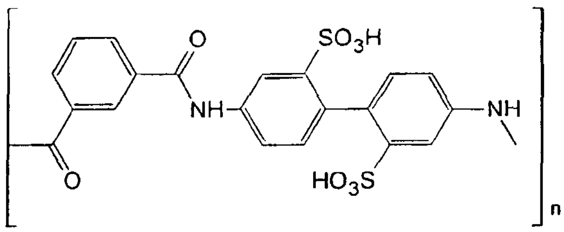<br>poly(2,2'-disulfo-4,4'-benzidine isophthalamide) | (2) |
| 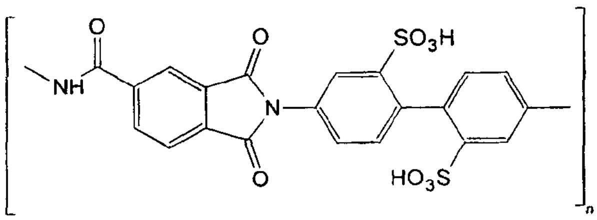<br>poly(2,2'-disulfo-4,4'-benzidine 1,3-dioxo-isoindoline-5-carboxamide) | (3) |
| 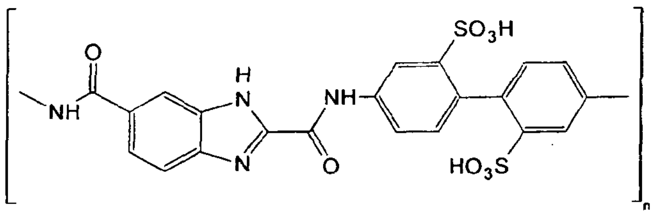<br>poly(2,2'-disulfo-4,4'-benzidine 1H-benzimidazole-2,5-dicarboxamide) | (4) |

(continued)

| | |
|---|---|
| 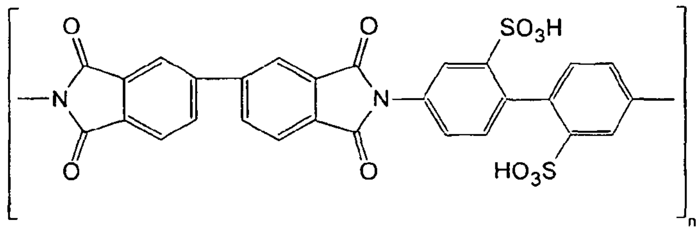<br>poly(2,2'-disulfo-4,4'-benzidine 3,3',4,4'-biphenyl tetracarboxylic acid diimide) | (5) |
| 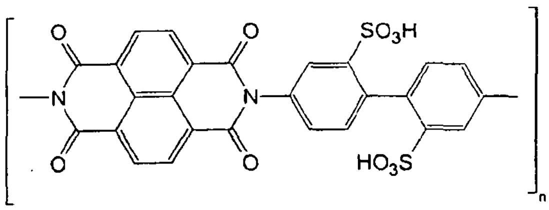<br>poly(2,2'disulpho-4,4'benzidine 1,4,5,8-naphtalene tetracarboxylic acid diimide) | (6) |

**5.** An organic polymer compound according to any of Claims 1 to 4, wherein the salt of the organic polymer compound is selected from the list comprising alkaline metal salts, ammonium and alkyl-substituted ammonium salts.

**6.** An optical film comprising:

a substrate having front and rear surfaces, and
at least one solid optical retardation layer on the front surface of the substrate,
wherein the solid optical retardation layer comprises
at least one organic polymer compound according to any of Claims 1 to 5, and
wherein the solid optical retardation layer is a negative C-type or Ac-type plate substantially transparent to electromagnetic radiation in the visible spectral range.

**7.** An optical film according to any of Claim 6, wherein said solid retardation layer is an uniaxial retardation layer possessing two refractive indices ($n_x$ and $n_y$) corresponding to two mutually perpendicular directions in the plane of the substrate and one refractive index ($n_z$) in the normal direction to the plane of the substrate, and wherein the refractive indices obey the following condition: $n_z < n_x \ n_y$.

**8.** An optical film according to Claim 6, wherein said solid retardation layer is a biaxial retardation layer possessing two refractive indices ($n_x$ and $n_y$) corresponding to two mutually perpendicular directions in the plane of the substrate and one refractive index ($n_z$) in the normal direction to the plane of the substrate, and wherein the refractive indices obey the condition: $n_z < n_y < n_x$.

**9.** An optical film according to any of Claims 6 to 8, wherein the substrate material is selected from the list comprising polymer and glass.

**10.** A method of producing an optical film, comprising the steps of

a) preparation of a solution of an organic polymer compound according to any of Claims 1 to 5, and
b) application of a liquid layer of the solution onto a substrate,
wherein the liquid layer is substantially transparent for electromagnetic radiation in the visible spectral range; and
c) drying to form a solid optical retardation layer,
wherein during the drying step a viscosity of the solution increases without mesophase formation.

**11.** A method according to Claim 10, further comprising a post-treatment step comprising a treatment with a solution of any aqueous-soluble inorganic salt with a cation selected from the list comprising $H^+$, $Ba^{2+}$,$Pb^{2+}$, $Ca^{2+}$, $Mg^{2+}$, $Sr^{2+}$, $La^{3+}$, $Zn^{2+}$, $Zr^{4+}$, $Ce^{3+}$, $Y^{3+}$, $Yb^{3+}$, $Gd^{3+}$ and any combination thereof.

**12.** A method according to any of Claims 10 to 11, wherein the application step is carried out using a coating technique

selected from the list comprising Mayer rod, slot die, extrusion, roll coating, knife coating, spray-coating, printing and molding.

**13.** A method according to Claim 10, wherein the sequence of the steps is repeated two or more times, and the solution used in the fabrication of each subsequent solid retardation layer is either the same or different from that used in the previous sequence of the steps.

## Patentansprüche

**1.** Eine organische Polymerverbindung mit der allgemeinen Strukturformel I:

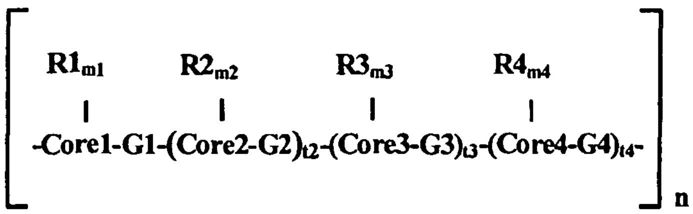

, (I)

die n organische Einheiten umfasst,
wobei die organische Einheit die konjugierten organischen Komponenten Core1, Core2, Core3 und Core4 umfasst, die in der Lage sind, ein starres, stäbchenartiges Makromolekül zu bilden, G1, G2, G3 und G4 Spacer sind, die ausgewählt werden aus einer Liste bestehend aus -C(O)-NH-, -NH-C(O), -N=(C(O)2=, -O-NH-, linearen und verzweigten (C1-C4)-Alkylenen, linearen und verzweigten (C1-C4)-Alkenylenen, -O-CH2-, -CH2-O-, -CH=CH-, -CH=CH-C(O)O-, -O(O)C-CH=CH-, -C(O)-CH2-, -OC(O)-O-, -OC(O)-, -C=C-, -C(O)-S-, -S-. -S-C(O)-, -O-, -NH-, -N (CH3)-; R1, R2, R3 und R4 lyophile Seitengruppen sind, die der organischen Polymerverbindung oder ihren Salzen in einem geeigneten Lösungsmittel Löslichkeit verleihen und die gleich oder verschieden sind und unabhängig voneinander ausgewählt werden aus der Liste bestehend aus -COOH, $-SO_3H$ und $-H_2PO_3$ für Wasser oder ein mit Wasser mischbares Lösungsmittel, und linearem und verzweigtem (C1-C20)-Alkyl, (C2-C20)-Alkenyl und (C2-C20)-Alkynyl für ein organisches Lösungsmittel; m1, m2, m3 und m4 dementsprechend Zahlen der lyophilen Seitengruppen R1, R2, R3 und R4 in den konjugierten organischen Komponenten Core1, Core2, Core3 und Core4 sind, wovon die Summe m=m1+m2+m3+m4 gleich 1, 2, 3, 4, 5, 6, 7 oder 8 ist; wobei die Zahl n eine ganze Zahl im Bereich von 5 bis 1000 ist,
und
wobei t2, t3 und t4 Zahlen sind, die unabhängig voneinander zwischen 0 und 1 ausgewählt werden, wobei eine Lösung der organischen Polymerverbindung in der Lage ist, eine massive optische Verzögerungsschicht aus einer Platte vom negativen C-Typ oder Ac-Typ, die im Wesentlichen durchlässig für elektromagnetische Strahlung im sichtbaren Spektralbereich ist, zu bilden;
wobei die organischen Komponenten Core2, Core2, Core3 und Core4 dem Makromolekül Linearität und Steifigkeit verleihen und die organischen Komponenten, die lyophilen Seitengruppen und die Anzahl der organischen Einheiten ein Verhältnis zwischen den mesogenen Eigenschaften und der Viskosität der Lösung kontrollieren.

**2.** Eine organische Polymerverbindung gemäß Anspruch 1, wobei die organischen Einheiten gleich sind oder sich mindestens eine organische Einheit unterscheidet.

**3.** Eine organische Polymerverbindung gemäß Anspruch 1 oder 2, wobei die organischen Komponenten Core1, Core2, Core3 und Core4 allgemeine Strukturformeln aufweisen, die unabhängig voneinander ausgewählt werden aus der Liste bestehend aus den allgemeinen Formeln II bis VIII:

| | |
|---|---|
| 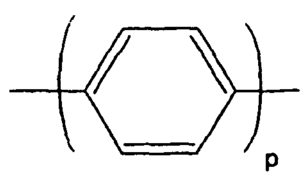 | (II) |

(fortgesetzt)

| | |
|---|---|
| 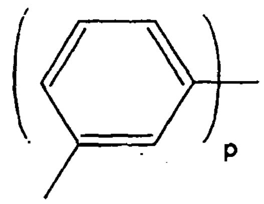 | (III) |
| 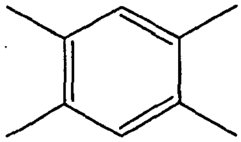 | (IV) |
| 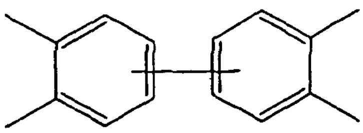 | (V) |
| 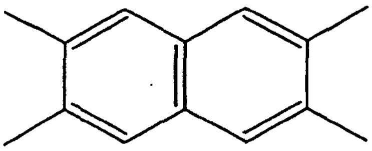 | (VI) |
| 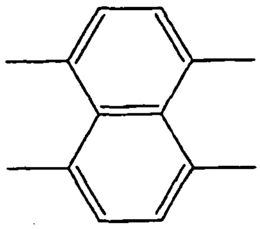 | (VII) |
| 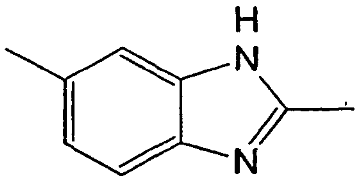 | (VIII) |

wobei p 1, 2, 3, 4, 5 oder 6 entspricht.

**4.** Eine organische Polymerverbindung gemäß einem der Ansprüche 1 bis 3 mit einer Strukturformel I, wobei $t_2$ gleich 1 ist, $t_3$=$t_4$=0, m1=0 und m2=2; die organische Komponente Core1 aus den allgemeinen Formeln II, III ausgewählt wird, wobei p=1, V, VII und VIII; die organische Komponente Core2 die allgemeine Formel aufweiset, wobei p=2, die lyophile Seitengruppe R2 eine Sulfogruppe $SO_3H$ ist; wobei der Spacer G1 ausgewählt wird aus der Liste bestehend aus -C(O)-NH und =2(C(O))=N-; und der Spacer G2 ausgewählt wird aus der Liste bestehend aus -C (O)-, -NH-C(O)-, N=C(O))2=; und wobei die organische Polymerverbindung ausgewählt wird aus den Strukturformeln 1 bis 6:

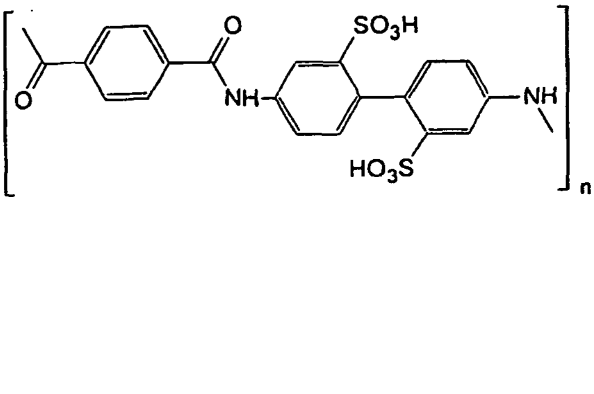

(1)

Poly(2,2'-disulfo-4,4'benzidin-terephthalamid)

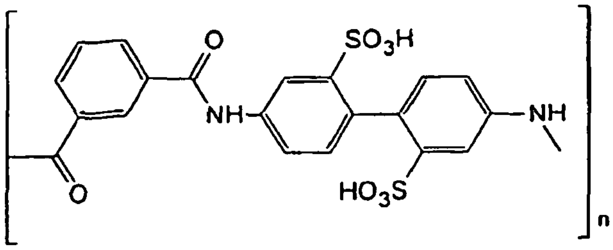

(2)

Poly(2,2'-disulfo-4,4'benzidin-isophthalamid)

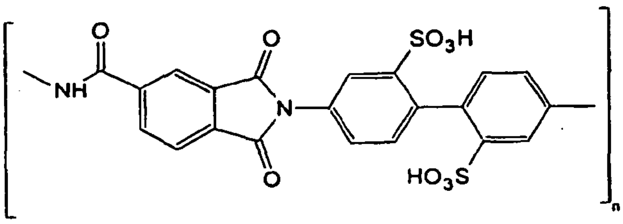

(3)

Poly(2,2'-disulfo-4,4'-benzidin-1,3- dioxo-isoindolin-5-carboxamid)

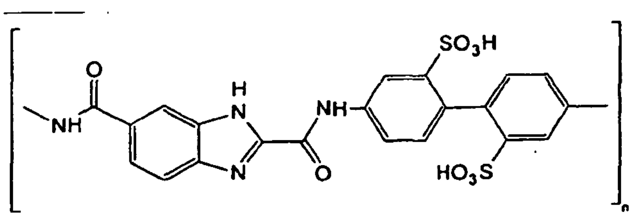

(4)

Poly(2,2'-disulfo-4,4'-benzidin-1H-benzimidazol-2,5-dicarboxamid)

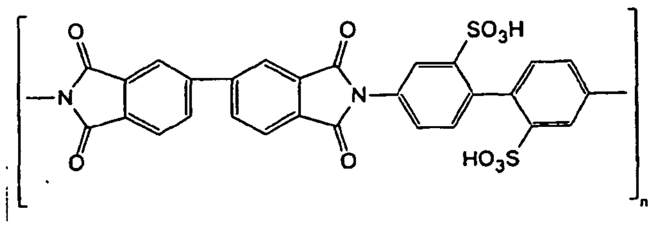

(5)

Poly(2,2'-disulfo-4,4'-benzidin-3,3'4,4-Biphenyltetracarboxylsäure-diimid)

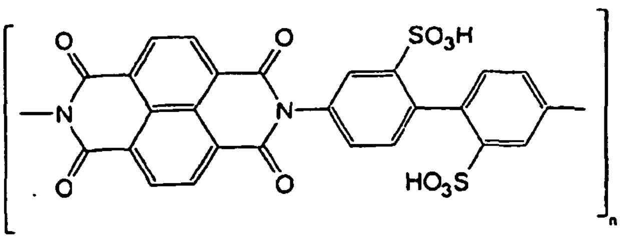

(6)

Poly(2,2'-disulfo-4,4'-benzidin-1,4,5,8-Naphthalentetracarboxylsäure-diimid)

**5.** Eine organische Polymerverbindung gemäß einem der Ansprüche 1 bis 4, wobei das Salz der organischen Polymerverbindung ausgewählt wird aus der Liste bestehend aus Alkalimetallsalzen, Ammonium und Alkyl-substituierten Ammoniumsalzen.

**6.** Eine optische Folie, bestehend aus:

einem Substrat mit einer Vorder- und Rückseite und
mindesten einer kompakten optischen Verzögerungsschicht auf der Vorderfläche des Substrates,
wobei die kompakte optische Verzögerungsschicht Folgendes umfasst:

mindestens eine organische Polymerverbindung gemäß einem der Ansprüche 1 bis 5 und
wobei die kompakte optische Verzögerungsschicht eine Platte vom negativen C-Typ oder Ac-Typ ist, die im Wesentlichen durchlässig für elektromagnetische Strahlung im sichtbaren Spektralbereich ist;

**7.** Eine optische Folie gemäß Anspruch 6, wobei die kompakte Verzögerungsschicht eine uniaxiale Verzögerungsschicht mit zwei Brechungsindizes ($n_x$ und $n_y$), welche zwei zueinander senkrecht liegenden Richtungen in der Ebene des Substrats entsprechen, sowie einem Brechungsindex ($n_z$) in der Normalrichtung zur Ebene des Substrats ist, und worin die Brechungsindizes die folgende Bedingung einhalten: $n_z < n_x = n_y$.

**8.** Eine optische Folie gemäß Anspruch 6, wobei die kompakte Verzögerungsschicht eine biaxiale Verzögerungsschicht mit zwei Brechungsindizes ($n_x$ und $n_y$), welche zwei zueinander senkrecht liegenden Richtungen in der Ebene des Substrats entsprechen, sowie einem Brechungsindex ($n_z$) in der Normalrichtung zur Ebene des Substrats ist, und worin die Brechungsindizes die folgende Bedingung einhalten: $n_z < n_y < n_x$.

**9.** Eine optische Folie gemäß einem der Ansprüche 6 bis 8, wobei das Substratmaterial aus der Liste bestehend aus Polymer und Glas ausgewählt wird.

**10.** Ein Verfahren zur Herstellung einer optischen Folie, bestehend aus folgenden Schritten:

a) Herstellung einer Lösung einer organischen Polymerverbindung gemäß einem der Ansprüche 1 bis 5 und
b) Auftragen einer Flüssigkeitsschicht der Lösung auf ein Substrat,
wobei die Flüssigkeitsschicht für elektromagnetische Strahlung im sichtbaren Spektralbereich überwiegend durchlässig ist; und
c) Trocknen zur Bildung einer kompakten optischen Verzögerungsschicht,
wobei sich während des Trocknungsvorgangs eine Viskosität der Lösung ohne Mesophasenbildung erhöht.

**11.** Ein Verfahren gemäß Anspruch 10, das überdies einen Nachbehandlungsschritt umfasst, bestehend aus einer Behandlung mit einer Lösung aus einem wasserlöslichen anorganischen Salz mit einem Kation, das ausgewählt wird aus der Liste bestehend aus $H^+$, $Ba^{2+}$, $Pb^{2+}$, $Ca^{2+}$, $Mg^{2+}$, $Sr^{2+}$, $La^{3+}$, $Zn^{2+}$, $Zr^{4+}$, $Ce^{3+}$, $Y^{3+}$, $Yb^{3+}$, $Gd^{3+}$ und einer Kombination daraus.

**12.** Ein Verfahren gemäß einem der Ansprüche 10 bis 11, wobei der Anwendungsschritt mithilfe einer Beschichtungsmethode durchgeführt wird, welche ausgewählt wird aus der Liste bestehend aus Mayer-Stab-, Schlitzdüsen-, Extrusions-, Rollen-, Messer-, Sprühbeschichtung, Druck- und Formverfahren.

**13.** Ein Verfahren gemäß Anspruch 10, wobei die Schrittfolge zweimal oder öfter wiederholt wird und die bei der Herstellung jeder darauffolgenden kompakten Verzögerungsschicht verwendete Lösung entweder gleich oder verschieden von der in der vorhergehenden Schrittfolge verwendeten Lösung ist.

## Revendications

**1.** Un composé polymère organique de la formule structurelle générale I :

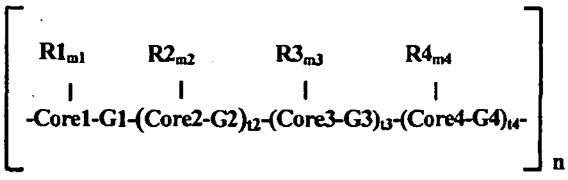
, (I)

comprenant *n* unités organiques,
où l'unité organique comprend des composants organiques conjugués Core1, Core2, Core3 et Core4 capables de former une macromolécule rigide semblable à une tige, G1, G2, G3 et G4 sont des espaceurs sélectionnés dans la liste comprenant -C(O)-NH-, -NH-C(O)-, - N=(C(O))2=, -O-NH-, alkylènes (C1-C4) linéaires et ramifiés, alcénylènes (C1-C4) linéaires et ramifiés, -O-CH2-, -CH2-O-, -CH=CH-, -CH=CH-C(O)O-, -O(O)C-CH=CH-, -C(O)-CH2-, -OC (O)-O-, -OC(O)-, -C=C-, -C(O)-S-, -S-, -S-C(O)-, -O-, -NH-, -N(CH3)- ; R1, R2, R3 et R4 sont des groupes latéraux lyophiles fournissant une solubilité au composé polymère organique ou ses sels dans un solvant adapté et qui sont les mêmes ou différents et sélectionnés indépendamment dans la liste comprenant -COOH, $-SO_3H$, et $-H_2PO_3$ pour l'eau ou un solvant miscible à l'eau, et alkyle (C1-C20) linéaire et ramifié, alcényle (C2-C20), et alkinyle (C2-C20) pour un solvant organique ; m1, m2, m3 et m4 sont des nombres des groupes latéraux lyophiles R1, R2, R3 et R4 dans les composants organiques conjugués Core1, Core2, Core3 et Core4 respectivement, dont la somme m = m1 + m2 + m3 + m4 est égale à 1, 2, 3, 4, 5, 6, 7 ou 8, où le nombre n est un entier dans la plage de 5 à 1000,
et
t2, t3 et t4 sont des nombres qui sont sélectionnés indépendamment entre 0 et 1, où une solution du composé polymère organique est capable de former une couche de retardement optique solide d'une plaque de type C négatif ou de type Ac sensiblement transparente au rayonnement électromagnétique dans la gamme spectrale visible, où les composants organiques Core1, Core2, Core3 et Core4 fournissent la linéarité et la rigidité de la macromolécule, et les composants organiques, les groupes latéraux lyophiles et le nombre des unités organiques régulent un rapport entre propriétés mésogènes et viscosité de la solution.

**2.** Un composé polymère organique selon la Revendication 1, où les unités organiques sont les mêmes ou au moins une desdites unités organiques est différente.

**3.** Un composé polymère organique selon la Revendication 1 ou 2 où les composants organiques Core1, Core2, Core3 et Core4 possèdent des formules structurelles générales sélectionnées indépendamment dans la liste comprenant les formules générales II à VIII :

| | |
|---|---|
| 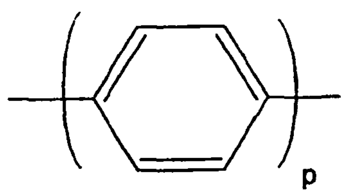 | (II) |
| 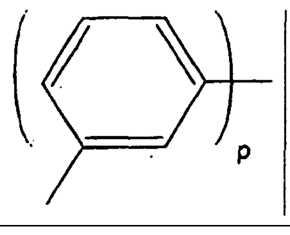 | (III) |
| 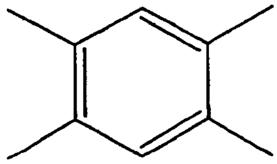 | (IV) |

(suite)

| | |
|---|---|
| 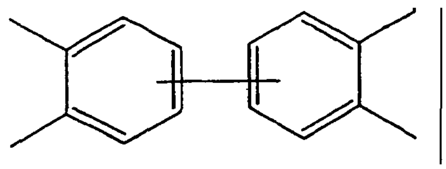 | (V) |
| 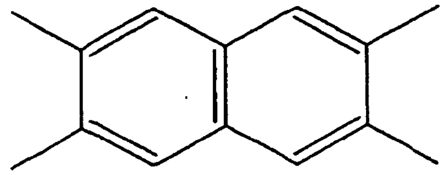 | (VI) |
| 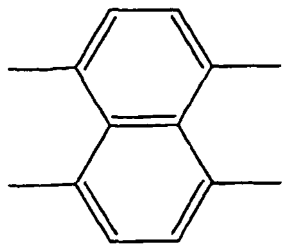 | (VII) |
| 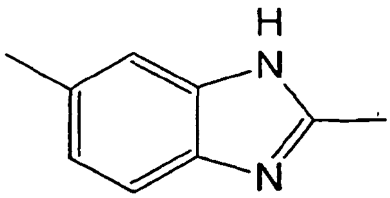 | (VIII) |

où p est égal à 1, 2, 3, 4, 5 ou 6.

**4.** Un composé polymère organique selon l'une quelconque des Revendications 1 à 3 possédant une formule structurelle I, où $t_2$ est égal à 1, $t_3$ = $t_4$, = 0, m1 = 0 et m2 = 2, le composé organique Core1 est sélectionné dans les formules générales II, III, où p = 1, V, VII et VIII, le composé organique Core2 possède la formule générale II, où p = 2, le groupe latéral lyophile R2 est un groupe sulfo $SO_3H$, l'espaceur G1 est sélectionné dans la liste comprenant -C(O)-NH- et =2(C(O))=N-, et l'espaceur G2 est sélectionné dans la liste comprenant -C(O)-, -NH-C(O)-, -N=(C(O))2=, et où le composé polymère organique est sélectionné dans les formules structurelles 1 à 6 :

| | |
|---|---|
| 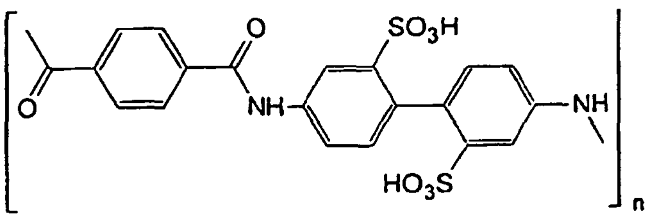 poly(2,2'-disulfo-4,4'-benzidine téréphthalamide) | (1) |
| 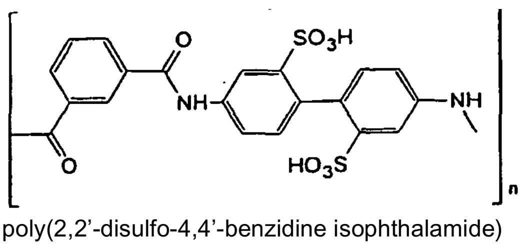 poly(2,2'-disulfo-4,4'-benzidine isophthalamide) | (2) |

(suite)

| | |
|---|---|
| 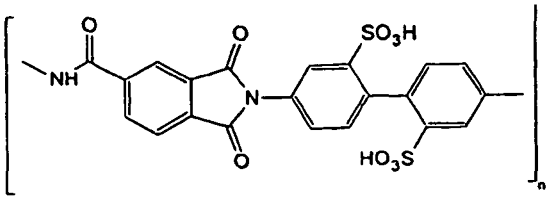 poly(2,2'-disulfo-4,4'-benzidine 1,3-dioxo-isoindoline-5-carboxamide) | (3) |
| 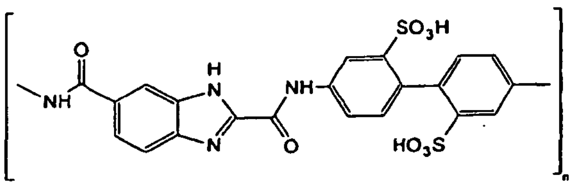 poly(2,2'-disulfo-4,4'-benzidine 1H-benzimidazole-2,5-dicarboxamide) | (4) |
| 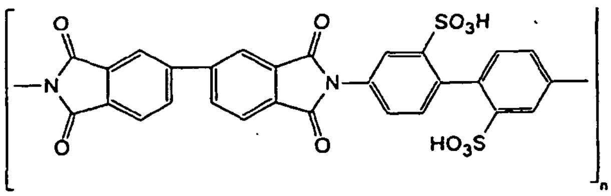 poly(2,2'-disulfo-4,4'-benzidine 3,3',4,4'-acide biphényle tétracarboxylique diimide) | (5) |
| 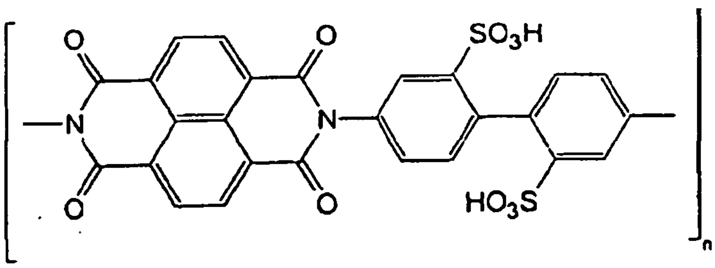 poly(2,2'disulpho-4,4'benzidine 1,4,5,8- naphtalène acide tétracarboxylique diimide) | (6) |

**5.** Un composé polymère organique selon l'une quelconque des Revendications 1 à 4, où le sel du composé polymère organique est sélectionné dans la liste comprenant sels de métaux alcalins, ammonium et sels d'ammonium à substitution alkyle.

**6.** Un film optique comprenant :

un substrat possédant des surfaces avant et arrière, et
au moins une couche de retardement optique solide sur la surface avant du substrat,
où la couche de retardement optique solide comprend
au moins un composé polymère organique selon l'une quelconque des Revendications 1 à 5, et
où la couche de retardement optique solide est une plaque de type C négatif ou de type Ac sensiblement transparente au rayonnement électromagnétique dans la gamme spectrale visible.

**7.** Un film optique selon la Revendication 6, où ladite couche de retardement solide est une couche de retardement uniaxiale possédant deux indices de réfraction ($n_x$ et $n_y$) correspondant à deux directions mutuellement perpendiculaires dans le plan du substrat et un indice de réfraction ($n_z$) dans la direction normale au plan du substrat, et où les indices de réfraction satisfont la condition suivante: $n_z < n_x = n_y$.

**8.** Un film optique selon la Revendication 6, où ladite couche de retardement solide est une couche de retardement biaxiale possédant deux indices de réfraction ($n_x$ et $n_y$) correspondant à deux directions mutuellement perpendiculaires dans le plan du substrat et un indice de réfraction ($n_z$) dans la direction normale au plan du substrat, et où les indices de réfraction satisfont la condition : $n_z < n_y < n_x$.

**9.** Un film optique selon l'une quelconque des Revendications 6 à 8, où le matériau de substrat est sélectionné dans la liste comprenant polymère et verre.

**10.** Un procédé de production d'un film optique, comprenant les opérations suivantes :

a) la préparation d'une solution d'un composé polymère organique selon l'une quelconque des Revendications 1 à 5, et
b) l'application d'une couche liquide de la solution sur un substrat,
où la couche liquide est sensiblement transparente au rayonnement électromagnétique dans la gamme spectrale visible, et
c) le séchage de façon à former une couche de retardement optique solide,
où, au cours de l'opération de séchage, une viscosité de la solution augmente sans formation de mésophase.

**11.** Un procédé selon la Revendication 10, comprenant en outre une opération de post-traitement comprenant un traitement avec une solution de tout sel inorganique hydrosoluble avec un cation sélectionné dans la liste comprenant $H^+$, $Ba^{2+}$, $Pb^{2+}$+, $Ca^{2+}$, $Mg^{2+}$, $Sr^{2+}$, $La^{3+}$, $Zn^{2+}$, $Zr^{4+}$, $Ce^{3+}$, $Y^{3+}$, $Yb^{3+}$, $Gd^{3+}$ et toute combinaison de ceux-ci.

**12.** Un procédé selon l'une quelconque des Revendications 10 à 11, où l'opération d'application est effectuée au moyen d'une technique d'enrobage sélectionnée dans la liste comprenant tige Mayer, filière droite plane, extrusion, revêtement au rouleau, revêtement au couteau, revêtement par pulvérisation, impression et moulage.

**13.** Un procédé selon la Revendication 10, où la séquence d'opérations est répétée deux fois ou plus et la solution utilisée dans la fabrication de chaque couche de retardement solide subséquente est soit la même ou est différente de celle utilisée dans la séquence d'opérations précédente.

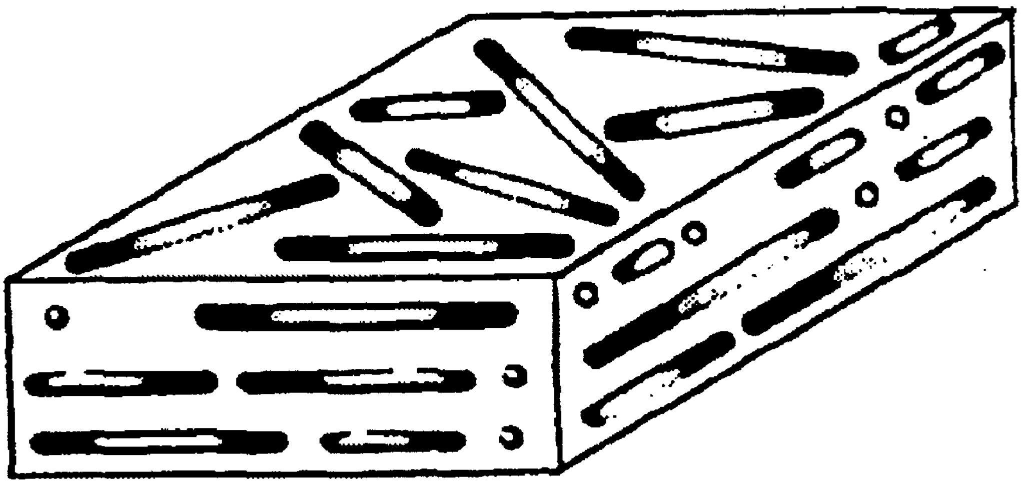

Figure 1 (Prior art)

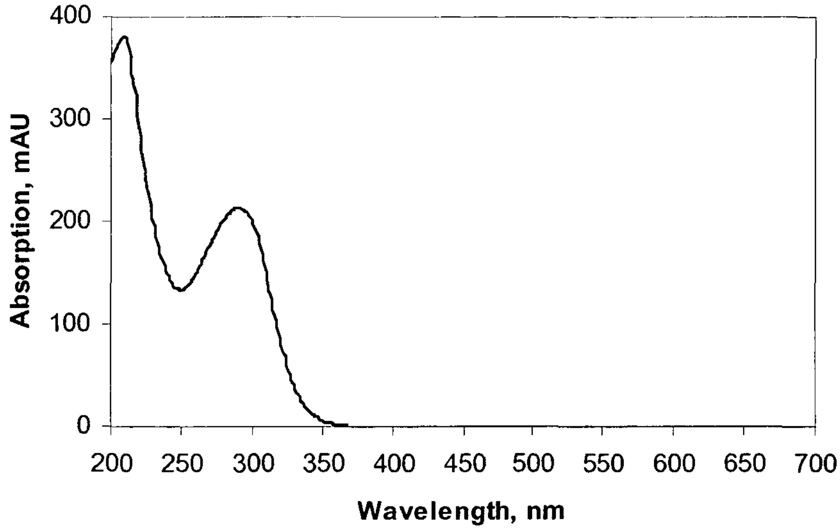


Figure 2

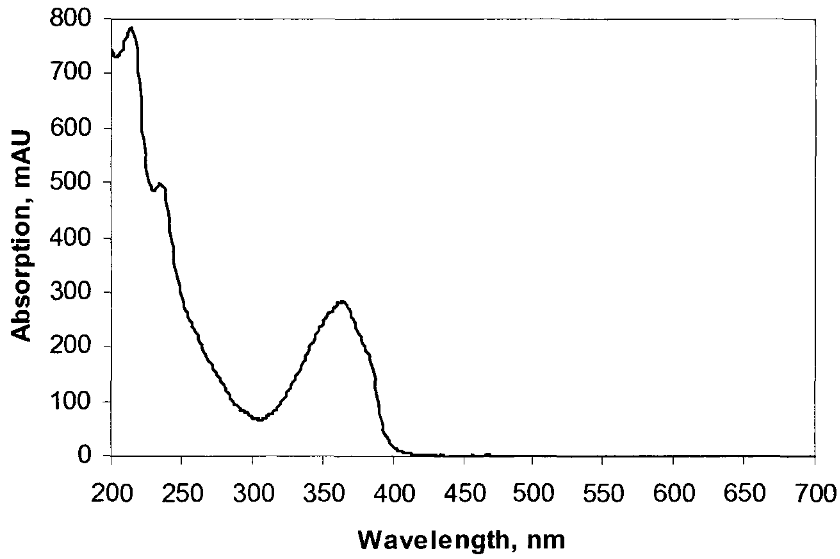


Figure 3

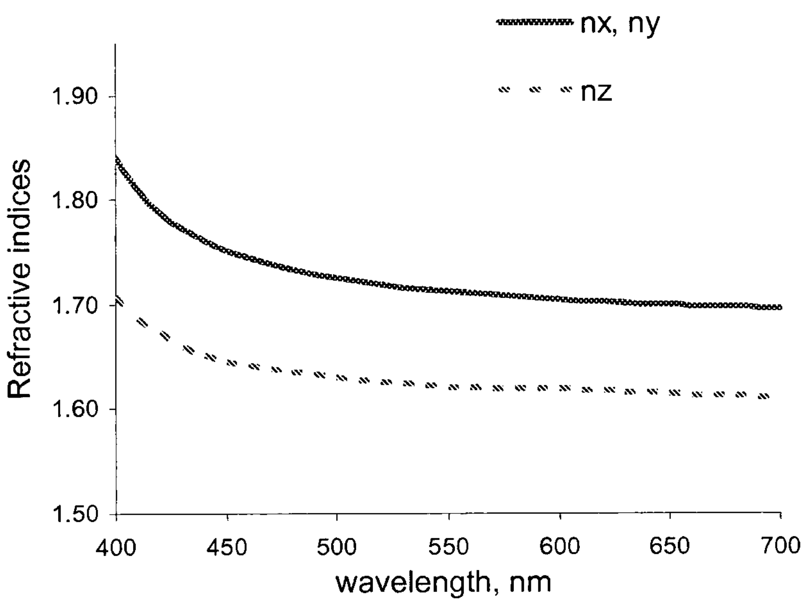


Figure 4

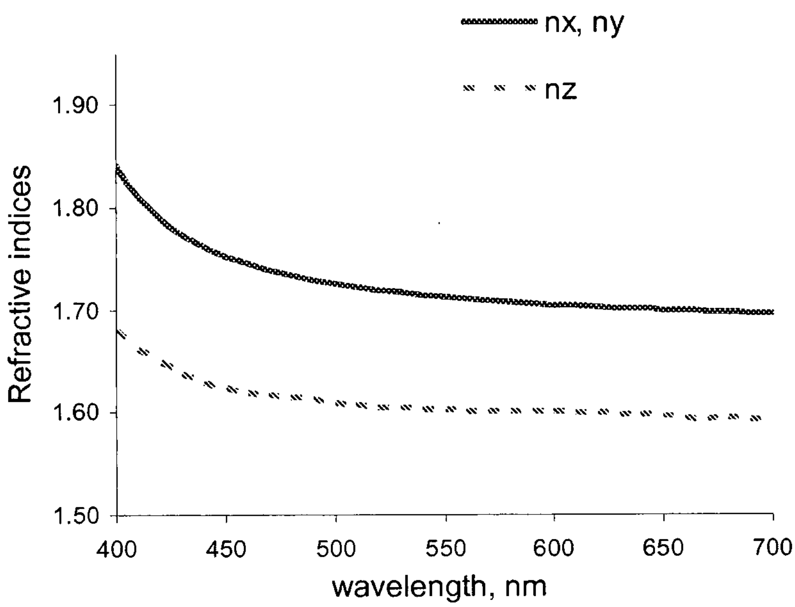


Figure 5

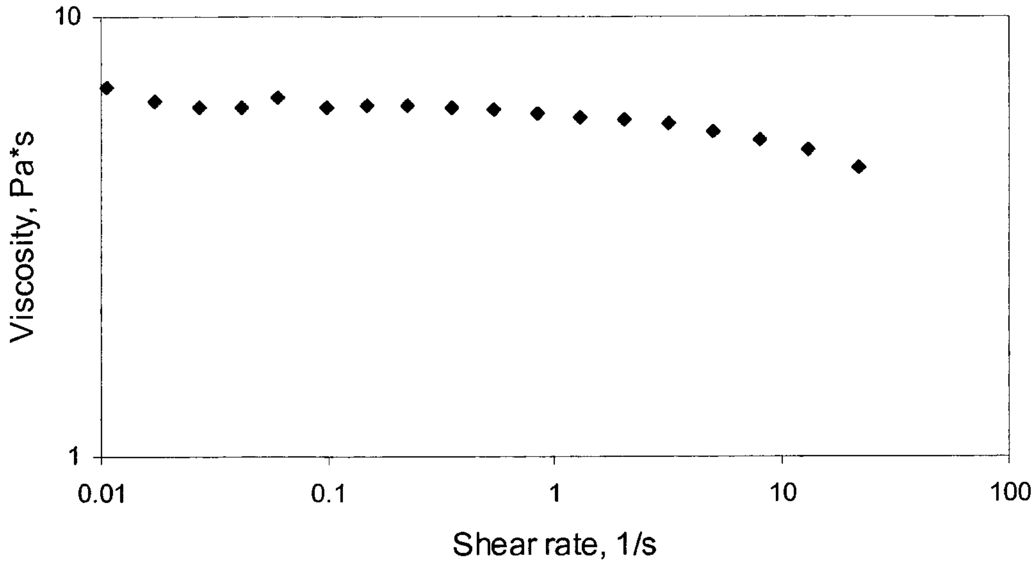


Figure 6

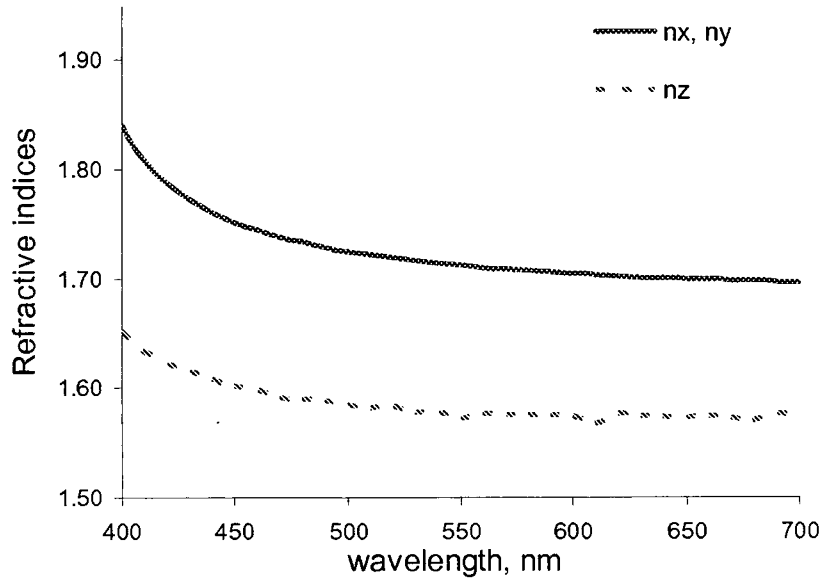


Figure 7

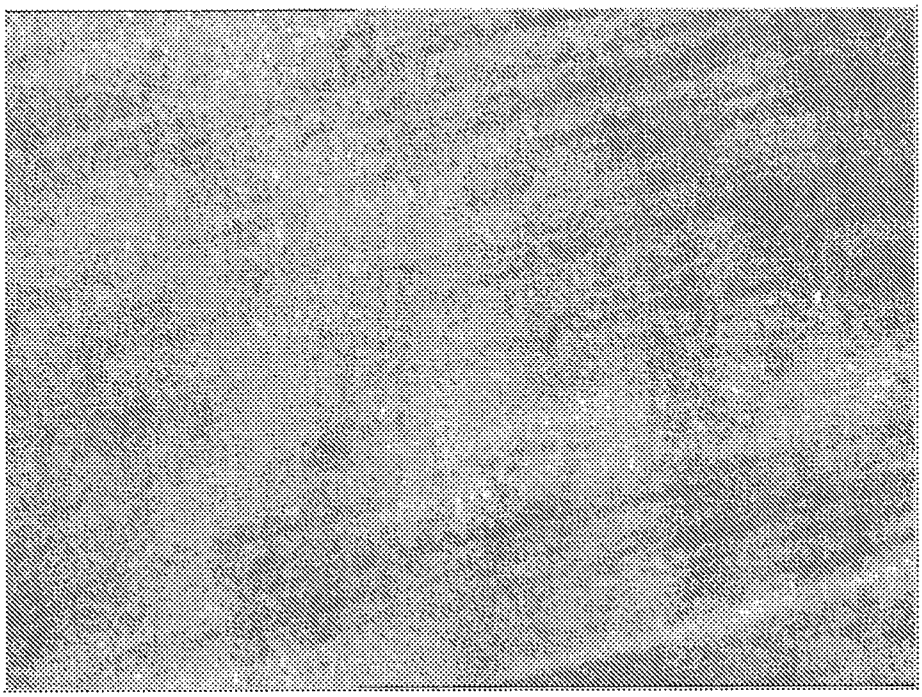

Figure 8

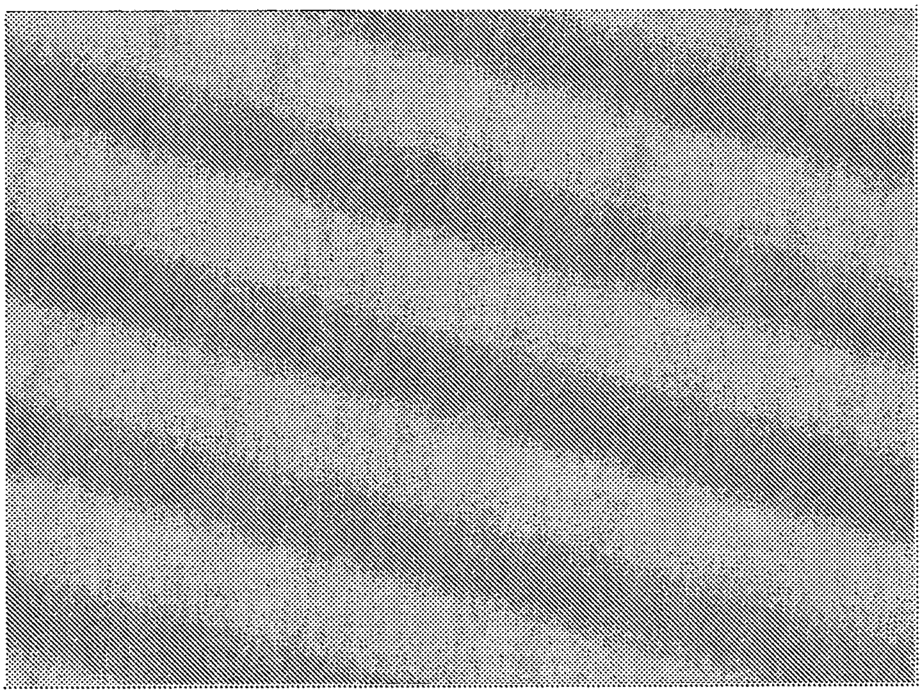

Figure 9

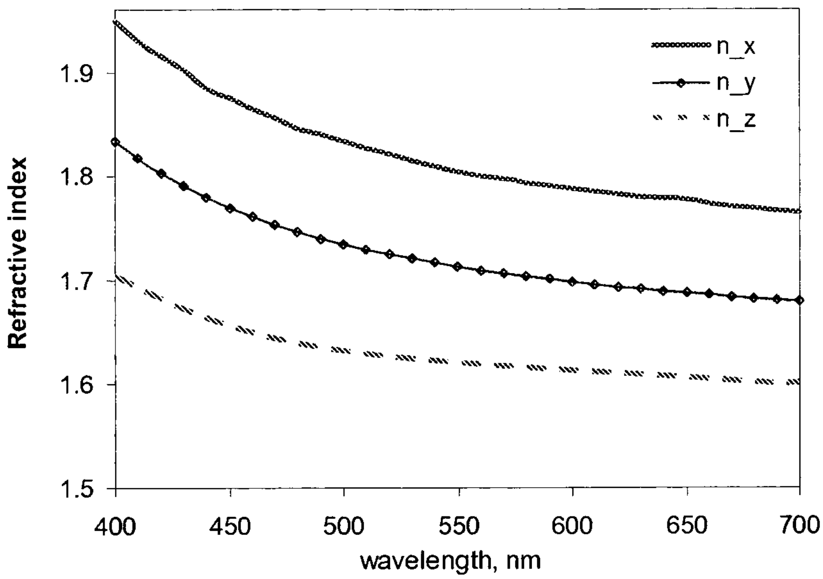


Figure 10

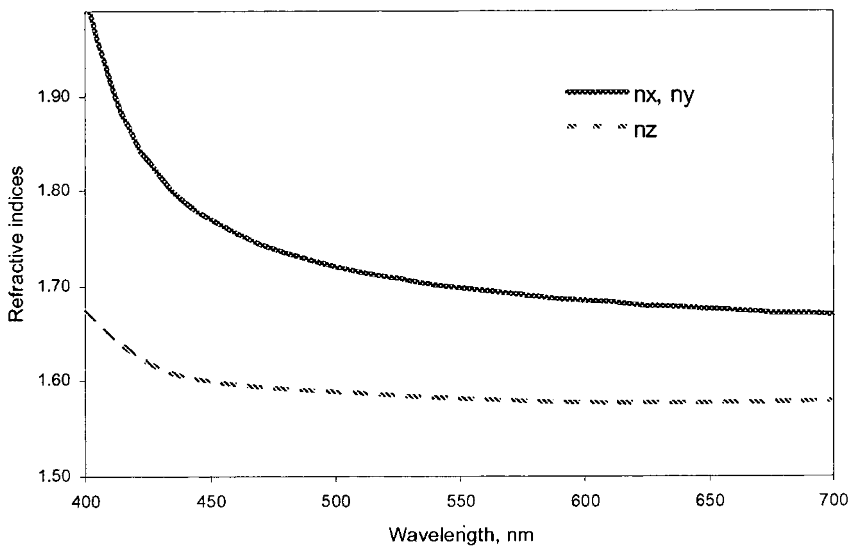


Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009130675 A
- US 4749770 A
- US 2005209429 A1


### Non-patent literature cited in the description


- **LI et al.** *Polymer,* 1997, vol. 38 (13), 3223-3227
- **T. FUNAKI et al.** *Langmuir,* 2004, vol. 20, 6518-6520
- **N. SARKAR ; D. KERSHNER.** *Journal of Applied Polymer Science,* 1996, vol. 62, 393-408
- **EMMA THORM-CSANYI ; PETER KRAXNER.** Synthesis of Thermotropic Liquid Crystalline All-Trans-p-Phenylenevinylene Oligomers via Two-step Metathesis. *Macromol. Symp.,* 1997, vol. 122, 77-81
- Nematic Ionomers as Materials for the Build-up of Multilayers. **PASSMANN M et al.** Macromolecular Chemistry and Physics. Wiley-vch Verlag, 01 February 1998, vol. 199
- **FUJISHIRO K. et al.** Effect of Branched Methyl Group in Lateral Substituent of Main Chan Liquid Crystalline Polyesters. *Polymer Journal, Society of Polymer Science,* 15 December 1992, vol. 24 (12), 1337-1343